# EUROPEAN PATENT SPECIFICATION

(11) **EP 1 840 053 B1**
(45) Date of publication and mention of the grant of the patent: **10.02.2010**
(21) Application number: 06124605.4
(22) Date of filing: 22.11.2006
(51) Int. Cl.: B65G 47/91, B65G 49/06, B62D 65/18

(54) **Workpiece transfer method, system and device**
Verfahren, System und Vorrichtung zum Transfer von Bauteilen
Procédé, système et dispositif de transfert de pièces

(30) Priority: 27.02.2006 JP 2006050990; 08.08.2006 JP 2006215567
(43) Date of publication of application: 03.10.2007
(73) Proprietor: Nissan Motor Company Limited, Kanagawa-ku Yokohama-shi, Kanagawa 221-0023 (JP)
(72) Inventor: Nakamura, Setsuo Nissan Technical Centre, Atsugi-shi Kanagawa 243-0192 (JP); Motohashi, Yuta Nissan Technical Centre, Atsugi-shi Kanagawa 243-0192 (JP); Naito, Masayoshi Nissan Technical Centre, Atsugi-shi Kanagawa 243-0192 (JP); Honda, Yoshiharu Nissan Technical Centre, Atsugi-shi Kanagawa 243-0192 (JP); Masumo, Kenji Nissan Technical Centre, Atsugi-shi Kanagawa 243-0192 (JP); Nishimaki, Shouji Nissan Technical Centre, Atsugi-shi Kanagawa 243-0192 (JP)
(74) Representative: Brochard, Pascale

(56) References cited:
- US-A- 5 632 590
- US-A- 5 632 595
- US-A1- 2003 113 192

## Description

The present invention relates to a workpiece transfer method, a workpiece transfer system, and a workpiece transfer device. More specifically, the present invention relates to a workpiece transfer method, system or device in which workpieces are transferred from one set of pallets to another set of pallets.

US5632590 discloses a workpiece transfer method and apparatus relevant to the present invention, and comprising the features defined in the preambules of claims 1 and 8.

Often in automated production lines, a robotically operated transfer device is used to automatically remove (pickup) individual workpieces that have been stacked on a pallet and then transferred to another location or pallet. An example of such a robotically operated device is disclosed in Japanese Laid Open Patent Publication No. 2000-293695. In this publication, the transfer device has a visual sensing or imaging device that is attached to an end of a robot wrist. This imaging device captures images and based on the images captured by this imaging device, the three-dimensional positions of the individual workpieces are determined. Thus, the workpieces can be handled by feedback of the position detection data to the robot.

In view of the above, it will be apparent to those skilled in the art from this disclosure that there exists a need for an improved workpiece transfer system or method in which workpieces are transferred from one set of pallets to another set of pallets. This invention addresses this need in the art as well as other needs, which will become apparent to those skilled in the art from this disclosure.

It has been discovered that certain there are some disadvantages with the system described in the above mentioned publication in which the positions of the workpieces are determined using a visual sensor or imaging device. Not only are visual sensors costly, but the visual sensors do not respond well to changes in environment such as brightness in the detection area (changes resulting from variation in brightness). Thus, there are times when the correct positions of the workpieces are not properly detected by the visual sensor or imaging device.

In addition, with this type of device, the image data for the workpiece positions captured by the imaging device are subjected to processing to convert the image data to position data. When a malfunction occurs, a high-level of specialized skill in adjusting the robot and the imaging device interface is required, which is a disadvantage from the standpoint of maintenance.

It is an aim of the invention to address these problems and to improve upon known technology and methods. Other aims and advantages of the invention will become apparent from the following description, claims and drawings.

Aspects of the invention therefore provide a method, a device and a system as claimed in the appended claims.

According to another aspect of the invention there is provided a workpiece transfer method comprising providing a first pallet containing a workpiece at a first location adjacent to a robot having a transfer device that is movably attached to the robot to pick up the workpiece, transporting the workpiece from the first pallet using the transfer device to a positional adjustment part in response to pre-programmed operations of the robot and performing a workpiece alignment operation to align a workpiece holding position of the workpiece relative to the robot by subsequently moving the transfer device that is holding the workpiece as a result of the pre-programmed operations of the robot towards the positional adjustment part such that the workpiece contacts the positional adjustment part to move the workpiece with respect to the robot and to align the workpiece holding position in which the workpiece is held by the transfer device with a reference holding position of the robot.

In an embodiment, the providing of the first pallet containing the workpiece involves the workpiece being a sheet-form workpiece having a substantially rectangular shape and the performing of the workpiece alignment operation includes positioning the workpiece in a depthwise direction of the workpiece, a widthwise direction of the workpiece and a longitudinal direction of the workpiece by contacting the workpiece that is held by the transfer device with the positional adjustment part.

In an embodiment, the providing of the first pallet containing the workpiece further involves the workpiece having a pair of opposing linear edges and a pair of opposing curved edges and the performing of the workpiece alignment operation includes first contacting the linear edges with the position adjusting part and then contacting the curved edges with the position adjusting part to align the workpiece holding position in which the workpiece is held by the transfer device with a reference holding position of the robot.

The method may comprise providing a second pallet configured to receive the workpiece from the transfer device of the robot and placing the workpiece on the second pallet using the transfer device of the robot.

The method may comprise providing partitioning plates on the second pallet to support the workpiece at a prescribed spacing from an adjacent workpiece on the second pallet.

In an embodiment, the placing of the workpiece on the second pallet results the weight of the workpiece operatively engaging at least one of the partitioning plates on the second pallet to be lowered from a non-spacing position to a spacing position in which the workpiece is supported at the prescribed spacing from the adjacent workpiece on the second pallet.

In an embodiment, the transporting of the workpiece from the first pallet involves applying downward pressure to the workpiece while on the first pallet by a workpiece pressure device attached to the robot, and then subsequently holding and removing the workpiece with the transfer device.

According to another aspect of the invention there is provided a workpiece transfer system comprising a robot, a plurality of first pallets disposed in the vicinity of the robot with each of the first pallets supporting a plurality of vehicle workpieces, with one type of the vehicle workpieces being contained on each of the first pallets and different types of the vehicle workpieces being contained on separate ones of the first pallets such that each of the first pallets contains the vehicle workpieces for one vehicle model that is different from the vehicle workpieces supported on remaining ones of the first pallets, a set of second pallets sequentially disposed to receive the workpieces transferred from the first pallets such that the different types of the vehicle workpieces are received on each of the second pallets, a vehicle workpiece transfer device movably attached to the robot to transport a prescribed one of the vehicle workpieces from a designated one of the first pallets from among the vehicle workpieces of the different types of the vehicle workpieces on respective ones of the first pallets to one of the second pallets in accordance with a vehicle assembly production sequence and a positional adjustment mechanism configured and arranged to adjust a position of the vehicle workpiece that is held by the transfer device relative to the robot and a controller configured to control movements of the vehicle workpiece transfer device to perform a workpiece alignment operation to align a workpiece holding position of the vehicle workpiece relative to the robot by subsequently moving the transfer device that is holding the vehicle workpiece as a result of the pre-programmed operations of the robot towards the positional adjustment part such that the workpiece contacts the positional adjustment part to move the vehicle workpiece with respect to the robot and to align the workpiece holding position in which the vehicle workpiece is held by the transfer device with a reference holding position of the robot.

According to a further aspect of the invention there is provided a workpiece transfer device comprising a holding mechanism configured and arranged to hold a workpiece so as to be transferred from a first pallet to a second pallet, and a position adjustment mechanism configured and arranged to movably attach the holding mechanism to a wrist part of a robot such that a workpiece holding position in which the workpiece is held by the holding mechanism is adjustable with respect to the robot.

In an embodiment, the position adjustment mechanism is configured and arranged to align the workpiece holding position with respect to a robot reference holding position in a depthwise direction of the workpiece.

The device may comprise a workpiece detection mechanism configured and arranged to detect the workpiece that is held by the holding mechanism.

The device may comprise a rotating mechanism configured and arranged to rotate the workpiece that is held by the holding mechanism.

In an embodiment, the holding mechanism is arranged to hold a sheet-shaped workpiece with substantially rectangular shape and the position adjustment mechanism is arranged to move the workpiece that is held by the holding mechanism into contact with a positional adjustment part to perform a positional adjustment in a depthwise direction of the workpiece, the transverse direction of the workpiece, and the longitudinal direction of the workpiece.

The device may comprise a partitioning plate lowering mechanism configured and arranged to engage at least one partitioning plate of the second pallet to lower the least one partitioning plate from a non-spacing position to a spacing position in which the workpiece is supported at the prescribed spacing from an adjacent workpiece on the second pallet.

The device may comprise a workpiece pressure mechanism configured and arranged to apply a downward pressure on the workpiece to press a bottom end of the workpiece against the first pallet.

In an embodiment, the workpiece pressure mechanism includes an upward and downward movement mechanism that selectively moves at least one of pads upwardly and downwardly with respect to the workpiece to apply pressure to an upper end of the workpiece for holding the workpiece upright with a bottom edge of the workpiece disposed in a workpiece placement groove provided on the first pallet.

In an embodiment, the partitioning plate lowering mechanism includes: a link plate rotatably mounted to rotate under the weight of the workpiece when the workpiece is placed onto the second pallet; and a wire with a first end fixed to the link plate and a second end fixed to a rotating member that fixes the at least one partitioning plate, the link plate and the wire being further arranged with respect to the at least one partitioning plate such that the link plate rotates and pulls on the wire to cause the rotating member to rotate and the at least one partitioning plate to be lowered when the workpiece is placed onto the second pallet.

Embodiments of the invention may provide an inexpensive and low-maintenance workpiece transfer method and workpiece transfer system or device whereby it is possible to move glass from one pallet to another pallet without using visual sensors, while still providing high-precision positioning using a mechanical devices.

For example, a workpiece transfer method or system may comprise providing a first pallet containing a workpiece at a first location adjacent to a robot having a transfer device that is movably attached to the robot to pick up the workpiece, transporting the workpiece from the first pallet using the transfer device to a positional adjustment part in response to pre-programmed operations of the robot; and performing a workpiece alignment operation to align a workpiece holding position of the workpiece relative to the robot by subsequently moving the transfer device that is holding the workpiece as a result of the pre-programmed operations of the robot towards the positional adjustment part such that the workpiece contacts the positional adjustment part to move the workpiece with respect to the robot and to align the workpiece holding position in which the workpiece is held by the transfer device with a reference holding position of the robot.

Within the scope of this application it is envisaged that the various aspects, embodiments and alternatives set out in the preceding paragraphs, in the claims and in the following description, may be taken individually or in any combination thereof.

The present invention will now be described, by way of example only, with reference to the accompanying drawings in which:
Figure 1 is a simplified schematic layout diagram of a glass transfer system for transferring glass plates from a first pallet to a second pallet using a glass transfer device attached to a robot in accordance with one embodiment of the present invention;
Figure 2 is a simplified top plan view of one of the first pallets used in the glass transfer system of Figure 1 in accordance with the illustrated embodiment of the present invention;
Figure 3 is a simplified front elevational view of one of the first pallets used in the glass transfer system of Figure 1 in accordance with the illustrated embodiment of the present invention;
Figure 4(B) is a simplified front elevational view of one side of the second pallet illustrated in Figure 4(A) and showing the glass partitioning plates in the condition before the glass plates have been lowered;
Figure 4(C) is a simplified front elevational view of one side of the second pallet illustrated in Figure 4(A) and showing the glass partitioning plates in the condition after the glass plates have been lowered;
Figure 5 is a simplified front elevational view of one the second pallets used in the glass transfer system of Figure 1 in accordance with the illustrated embodiment of the present invention;
Figure 6 is a simplified front elevational view of one the glass transfer device used in the glass transfer system of Figure 1 in accordance with the illustrated embodiment of the present invention;
Figure 7 is a simplified top plan view of the glass transfer device illustrated in Figure 6 that is used in the glass transfer system of Figure 1 in accordance with the illustrated embodiment of the present invention;
Figure 8 is a simplified side elevational view of the glass transfer device illustrated in Figure 6 that is used in the glass transfer system of Figure 1 in accordance with the illustrated embodiment of the present invention;
Figure 9(A) is a simplified elevational view of one of the vacuum-chuck position adjustment units used in the glass transfer system of Figure 1 in accordance with the illustrated embodiment of the present invention, with the vacuum-chuck position adjustment unit in a first operating position;
Figure 9(B) is a simplified elevational view of one of the vacuum-chuck position adjustment units used in the glass transfer system of Figure 1 in accordance with the illustrated embodiment of the present invention, with the vacuum-chuck position adjustment unit in a second operating position;
Figure 10 is simplified elevational view of one of the glass detection units used in the glass transfer system of Figure 1 in accordance with the illustrated embodiment of the present invention;
Figure 11 (A) is a simplified elevational view of one of the partitioning plate lowering units used in the glass transfer system of Figure 1 in accordance with the illustrated embodiment of the present invention, with the vacuum-chuck position adjustment unit in a first operating position;
Figure 11(B) is a simplified elevational view of one of the partitioning plate lowering units used in the glass transfer system of Figure 1 in accordance with the illustrated embodiment of the present invention, with the vacuum-chuck position adjustment unit in a second operating position;
Figure 12(A) is a schematic positioning state diagram showing the glass holding points and the reference holding position of the robot in a condition in which the glass holding position corresponds to the reference holding position of the robot;
Figure 12(B) is another schematic positioning state diagram showing the glass holding points and the reference holding position of the robot in a condition in which the glass holding position has shifted to the right in the longitudinal direction of the glass with respect to the reference holding position;
Figure 12(C) is yet another schematic positioning state diagram showing the glass holding points and the reference holding position of the robot in a condition in which these glass holding position has shifted to the right in the longitudinal direction of the glass with respect to the reference holding position;
Figure 13(A) is another schematic positioning state diagram showing the glass holding points and the reference holding position of the robot showing an adjustment method in which the glass holding position is adjusted in a longitudinal direction of glass plates to match the reference holding position of the robot;
Figure 13(B) is another schematic positioning state diagram showing the glass holding points and the reference holding position of the robot showing an adjustment method in which the glass holding position is adjusted in a transverse direction of glass plates to match the reference holding position of the robot;
Figure 14 is a simplified diagram of a condition in which different types of glass plates that depend on the vehicle type or model are held by the vacuum-chuck position adjustment unit;
Figure 15 is a simplified top plan view of an operational state of a portion of the glass transfer system of Figure 1 during an operation in which the glass holding position in a depthwise direction of the glass plates is aligned with respect to the reference holding position of the handling robot;
Figure 16 is a simplified front elevational view of the operational state illustrate in Figure 15 of the portion of the glass transfer system of Figure 1 during an operation in which the glass holding position in the depthwise direction of the glass plates is aligned with respect to the reference holding position of the handling robot;
Figure 17 is a simplified perspective view of an operational state of a portion of the glass transfer system of Figure 1 during an operation in which the glass holding position in the transverse and longitudinal directions of the glass is aligned with respect to the reference holding position of the handling robot;
Figure 18 is a simplified side elevational view of an operational state of a portion of the glass transfer system of Figure 1 during an operation in which the glass holding position in the transverse and longitudinal directions of the glass is aligned with respect to the reference holding position of the handling robot;
Figure 19 is a simplified top plan view of the glass transfer device equipped with a glass pressure unit in accordance with the illustrated embodiment of the present invention;
Figure 20 is a simplified front elevational view of the glass transfer device illustrated in Figure 19 that is equipped with the glass pressure unit in accordance with the illustrated embodiment of the present invention;
Figure 21 is a simplified side elevational view of the glass transfer device illustrated in Figure 19 that is equipped with the glass pressure unit in accordance with the illustrated embodiment of the present invention;
Figure 22 is a simplified front elevational view of one of the second pallets equipped with a partitioning plate lowering unit for lowering the glass partitioning plates in conjunction with the weight of the glass;
Figure 23 is a simplified side elevational view of the second pallets illustrated in Figure 22 that is equipped with the partitioning plate lowering unit for lowering the glass partitioning plates in conjunction with the weight of the glass;
Figure 24 is a simplified front elevational view of a link plate attachment part that constitutes the partitioning plate lowering unit shown in Figure 22;
Figure 25 is a simplified side elevational view showing the link plate attachment part that constitutes the partitioning plate lowering unit shown in Figure 22;
Figure 26 is a simplified side elevational view showing a glass partitioning plate attachment part that constitutes the partitioning plate lowering unit shown in Figure 22; and
Figure 27 is a simplified front elevational view showing the glass partitioning plate attachment part that constitutes the partitioning plate lowering means shown in Figure 22.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

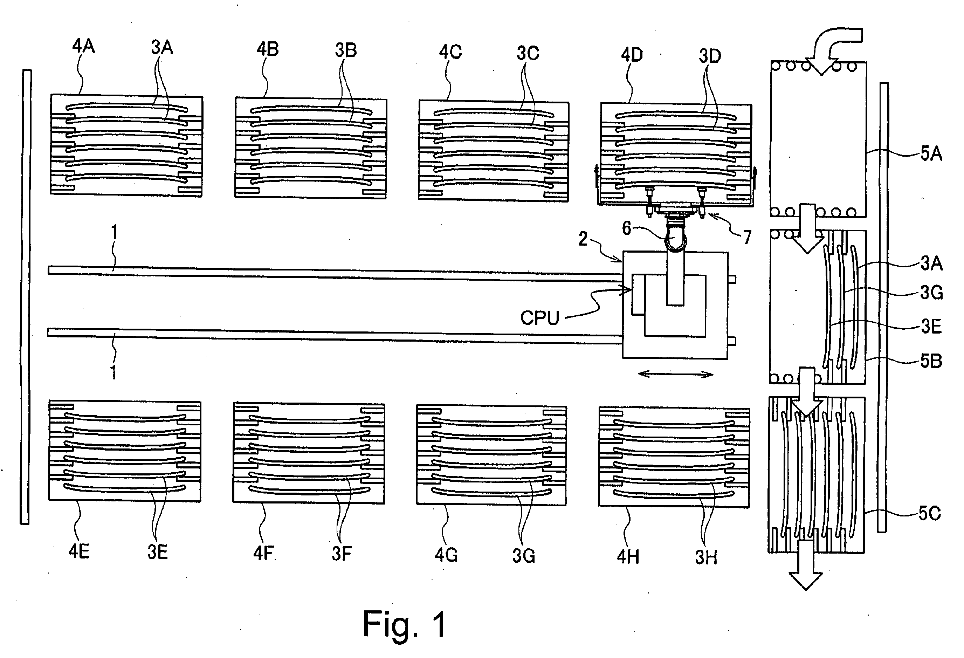

Referring initially to Figure 1, a glass or workpiece transfer system schematically is illustrated in accordance with a first embodiment of the present invention. The glass transfer system of this embodiment, as shown in Figure 1, includes a handling robot 2 which is a robot that moves on a pair of rails 1 disposed over a work floor. The glass transfer system is configured and arranged for transferring a plurality of glass plates or workpieces 3 from a set of first pallets 4 to a set of second pallets using a glass or workpiece transfer device 7 attached to the robot 2. The first pallets 4 (4A to 4H) are configures and arranged at first location to allow the glass plates 3 (3A to 3H) to be placed at a prescribed spacing along the direction of travel of the handling robot 2. The second pallets 5 (5A to 5C) onto which the glass plates 3 from the first pallets 4 are transferred and placed in sequence, and a glass transfer device 7 attached to the wrist part 6 of a handling robot 2. With the aid of the glass transfer device 7, the specified glass plates 3 are taken out from the first pallets 4, the glass holding position in which a glass plate 3 is held is then aligned with respect to the reference holding position of the handling robot 2, and the glass plate 3 is transferred to one of the second pallet 5.

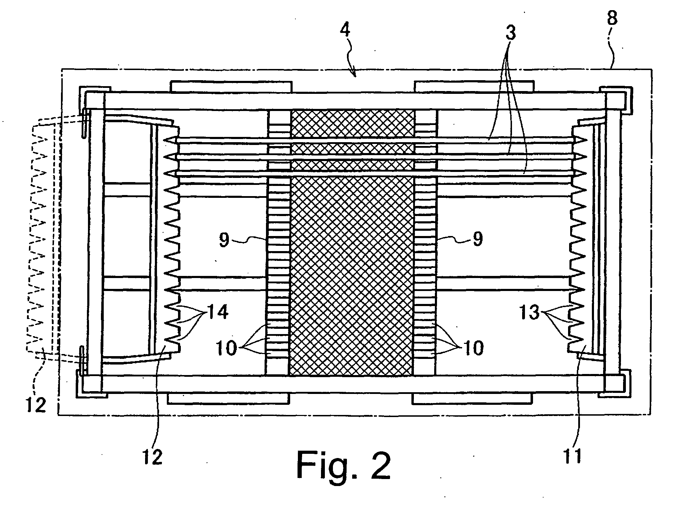

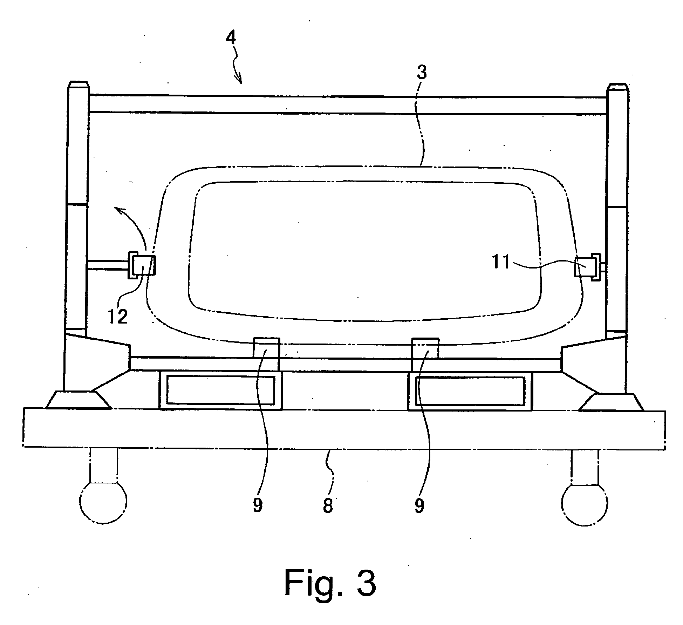

The first pallets 4 are specialty pallets for transporting the glass plates 3 from glass manufacturers that produce the glass plates 3 to vehicle production plants where vehicles are assembled using the glass plates 3. As shown in Figures 2 and 3, the pallets 4 are each placed on a dolly 8 to be moved to a prescribed location on the production plant floor. In this embodiment, several of the pallets 4 are placed at prescribed locations that are spaced along the route of travel (robot transport path) of the handling robot 2 that moves along the rails 1. In particular, the pallets 4 are placed on both sides of this robot transport path of the handling robot 2. In the illustrated example of Figure 1, four of the first pallets 4 are located on each side of the robot transport path, and thus a total of eight of the first pallets 4 are located on along the robot transport path of the handling robot 2.

The glass plates 3 are placed at a prescribed spacing on each of the first pallets 4. Each of the first pallets 4 (4A-4H) has a different type of the glass plates 3 in accordance with the vehicle type or model. However, within each of the first pallets 4, the glass plates 3 are all of the same type of glass plates. For example, the first pallet 4A has a plurality of glass plates 3A for vehicle type A, while the first pallet 4B has a plurality of glass plates 3B for vehicle type B.

The first pallets 4 each have a pair of glass (workpiece) placement/holding members 9 provided at the bottom of the pallets 4, which are used for controlling the placement of the glass plates 3 at a prescribed spacing on the pallets 4. The glass placement/holding members 9 have a plurality of glass placement grooves 10 used to hold the glass plates 3 at a prescribed spacing. In addition, the first pallets 4 each includes a pair of glass support members 11 and 12. The glass support members 11 and 12 are provided on each transverse side of the glass plates 3 so that the glass plates 3 are held in an upright state in the glass placement grooves 10. The glass support members 11 and 12 have one end fixed with respect to a support column of the pallet 4 that serves as a structural framework, and another end that is free to move. In this embodiment, the glass supports 12 on the left side of Figures 2 and 3 are configured so that they can move between a position in which the glass plates 3 are supported (position indicated by the solid line) and a position in which the supports 12 are located outside the support column so that the glass plates 3 are not supported (position indicated by the broken line). In addition, the glass support members 11 and 12 are provided with glass support grooves 13 and 14 for supporting each of the glass plates 3 at a prescribed spacing. Regarding the first pallets 4, each of the first pallets 4A to 4H are not precisely identical due to various non-uniformities in assembly precision or part precision. Thus, the first pallets 4A to 4H are non-uniformly manufactured such that the first pallets 4A to 4H have non-uniformities relating to their size or dimensions of each part occur among the pallets 4A to 4H.

The second pallets 5 are so-called production-line pallets for sequential arrangement of the glass plates 3 that have been taken out from the first pallets 4 by the glass transfer device 7. In particular, the glass plates 3A to 3H are taken out of the first pallets 4A to 4H and placed on at a prescribed spacing from the rear to front on corresponding ones of the second pallets 5 in accordance with a prescribed vehicle assembly production sequence such that each of the second pallets 5 has a plurality of the glass plates 3 with the type of glass plates being arranged in a particular sequence on the second pallets 5. For example, when the vehicle production sequence is to occur in the sequence "vehicle type D, vehicle type E, vehicle type G, vehicle type A," then the glass plates 3A, 3G, 3E, and 3D from the A dolly, the G dolly, the E dolly, and the D dolly are placed in this sequence on the second pallet 5 so that they are ordered from the front to the back of the pallets 5 in the vehicle production sequence.

As seen in Figure 1, the second pallets 5 are provided at the glass transfer position on the right side along an extension of the robot transport path described above. The second pallets 5 move along a pallet transport path having its pallet intake position located at the top of Figure 1, and its pallet discharge position located at the bottom of Figure 1. Thus, the pallet transport path of the second pallets 5 runs in sequence from top to bottom in Figure 1.

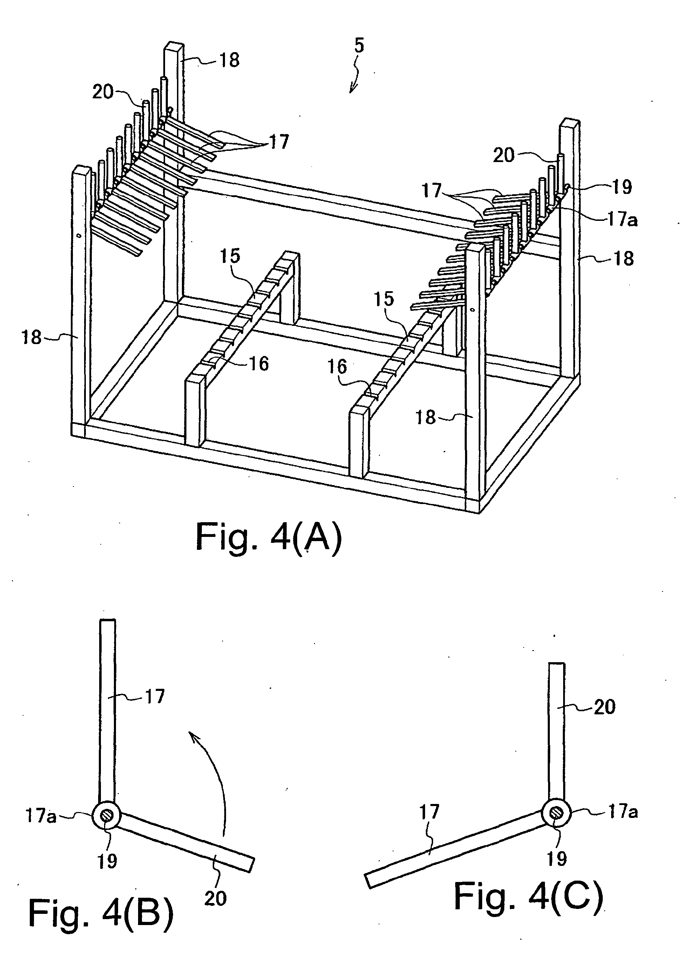

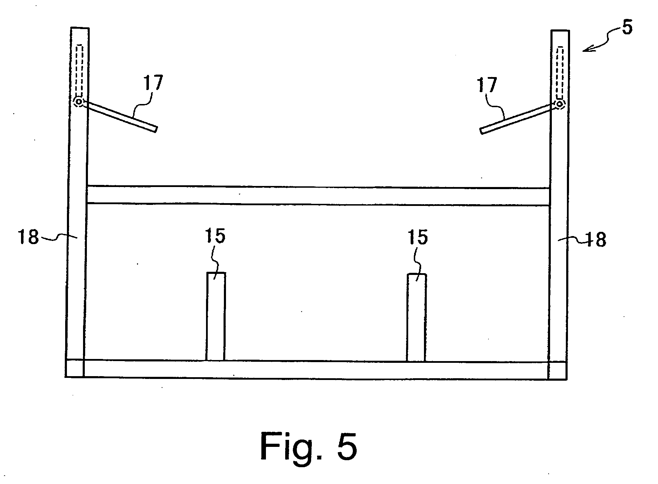

As with the first pallets 4, as seen in Figures 4(A), 4(B), 4(C) and 5, the second pallets 5 have a pair of glass placement/support members 15 for supporting a lower edge of the glass plates 3. Thus, the glass placement/support members 15 serve as framework structures that are provided at the bottom of the pallets 5 in order to control the placement of the glass plates 3 at a prescribed spacing. The glass placement/support members 15 are provided with a plurality of glass placement grooves 16. The glass placement grooves 16 are formed in the glass placement/support members 15 at a prescribed spacing so that the glass plates 3 are placed at the prescribed spacing. The second pallets 5 each have a plurality of glass partitioning plates 17 for supporting the glass plates 3 in an upright condition. These glass partitioning plates 17 are pivotally supported on support columns 18 of the pallets 5 that serve as frame structures of the pallets 5. Thus, the glass partitioning plates 17 are provided on each side in the widthwise direction of the glass plates 3 in order to support the glass plates 3 in a state in which the glass plates 3 are placed upright in the glass placement grooves 16 (upright condition), and in order to separate each of the glass plates 3.

As seen in Figures 4(B) and 4(C), these glass partitioning plates 17 are arranged so that these glass partitioning plates 17 can rotate with respect to a support axis 19 that is fixed between the support columns 18 of the pallets 5. After placement of glass plates 3 by the glass transport device 7, described below, the partitioning plates 17 are lowered by the glass transfer device 7 so that the glass plates 3 are separated from each other. The glass partitioning plates 17 are disposed in the axial direction of the support shaft 19 in accordance with the number of glass plates 3, and the base ends 17a are attached so that they can rotate around this support shaft 19. A pop-up rod 20 is provided on each of the glass partitioning plates 17. The pop-up rods 20 are configured and arranged to pop up by the glass transfer device 7 as explained below. The pop-up rods 20 are fixed at an angle of approximately 90° with respect to the glass partitioning plates 17 at the base ends 17a. Figure 4(B) shows the condition prior to pop-up of the pop-up rods 20 with the glass partitioning plates 17 arranged vertically. Figure 4(C) shows the condition in which the pop-up rods 20 have popped up and the glass partitioning plates 17 have moved down into a position to separate the glass plates 3 from each other.

The condition of the glass partitioning plates 17 before and after pop-up is held (locked) by a rotational holding mechanism (not shown in the figures) provided between the base end 17a and the support shaft 19. Easy transition from one condition to the other is possible as a result of an urging force of the rotational holding mechanism. Various conventional well-known mechanisms can be used for this rotational holding mechanism. The respective glass partitioning plates 17 prior to placement of the glass plates 3 from the first pallets 4, are all in the state shown in Figure 4(B) in which they are held vertically. After placement of the glass plates 3 on the second pallets 5, the glass plates 3 are separated as a result of the popped-up state shown in Figure 4(C).

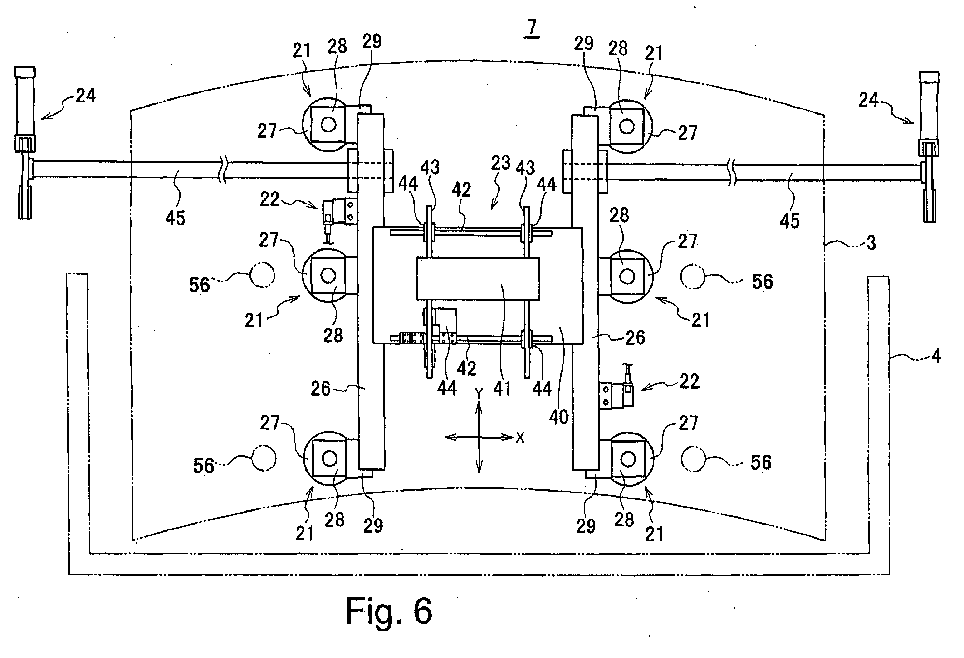

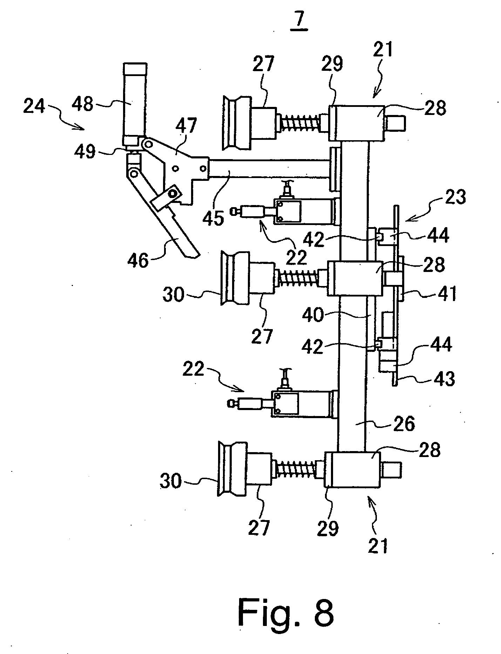

As shown in Figures 6 to 8, the glass transfer device 7 basically includes, among other things, a plurality of vacuum-chuck position adjustment units 21, a pair of glass detection units 22, a glass holding position adjustment unit 23 and a pair of partitioning plate lowering units 24. This glass transfer device 7 is a device that repeats a sequential series of operations in which specified ones of the glass plates 3 from among the glass plates 3A to 3H (sorted according to different types on the first pallets 4A to 4H) are taken out from prescribed ones of the first pallets 4 in accordance with the vehicle assembly production sequence. Thus, the glass plates 3 are transferred to one of the second pallets 5 in accordance with this assembly production sequence. The glass plates 3 are attached to the wrist part 6 of the handling robot 2. The glass plate transfer device 7 is attached to the wrist part 6 at the end of the wrist of a handling robot 2 that moves back and forth on rails 1. The glass plate transfer device 7 is configured so that the prescribed glass plates 3A to 3H are taken out from respective first pallets 4A to 4H by movement of the handling robot 2 in accordance with the production sequence. After correction of the glass plate holding position by the function of the glass plate transfer device 7 to adjust a glass holding position, the glass plate is placed one of the second pallet 5.

The glass transfer device 7 has a hand frame 25 is attached to the wrist part 6 of the handling robot 2. The hand frame 25 includes a pair of attachment arms 26 with three of the vacuum-chuck position adjustment units 21 mounted onto each of the attachment arms 26. In particular, the vacuum-chuck position adjustment units 21 are respectively attached to brackets 29 that are fixed to each of the attachment arms 26. The vacuum-chuck position adjustment units 21 each have a vacuum-chuck device 27 that holds the glass plates 3 by vacuum, and a depthwise position adjustment unit 28 that align the glass plate holding position in the depthwise direction of the glass plates 3 with respect to the reference holding position of the handling robot 2. The vacuum-chuck device 27 form a holding mechanism that is configured and arranged to hold the workpiece (the glass plate 3) so as to be transferred from the first pallet 4 to the second pallet 5. The depthwise position adjustment unit 28 forms a part of a workpiece position adjustment mechanism that is configured and arranged to movably attach the holding mechanism (the vacuum-chuck device 27) to the wrist part 6 of the handling robot 2 such that a workpiece holding position in which the workpiece is held by the holding mechanism is adjustable with respect to the robot 2 in the depthwise direction of the workpiece.

The glass detection units 22 are configured and arranged to detect the presence of the glass plate 3 being held by the vacuum-chuck position adjustment units 21. The glass holding position adjustment unit 23 are configured and arranged to align the glass holding position in both transverse and longitudinal directions of the glass plates 3 that are held by the vacuum-chuck position adjustment units 21 with respect to a reference holding position of the handling robot 2. The partitioning plate lowering unit 24 are configured and arranged to engage to the pop-up rods 20 for lowering the glass partitioning plates 17.

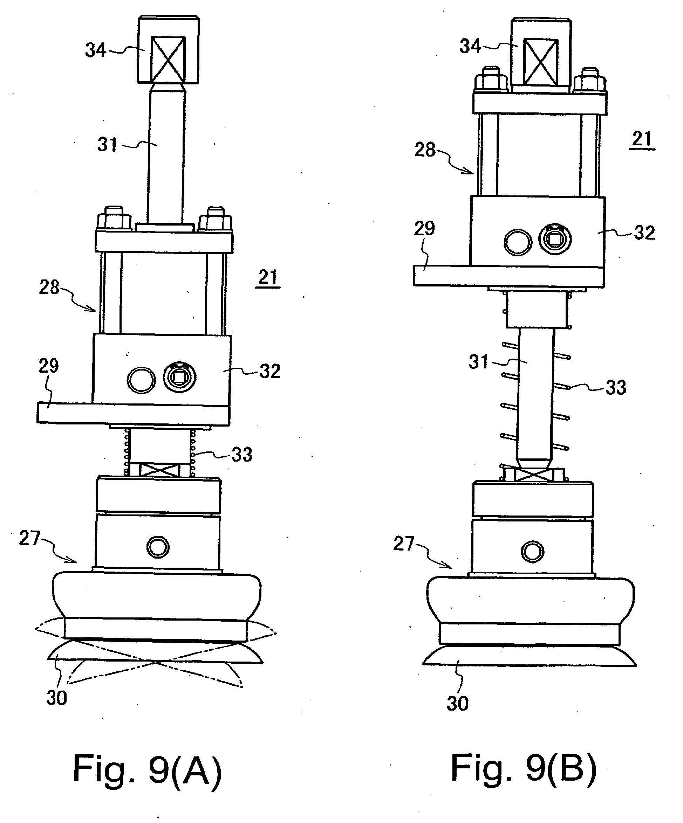

The vacuum-chuck device 27, as shown in Figures 9(A) and 9(B), has a vacuum-chuck pad 30 that that holds the glass plates 3 by vacuum. The vacuum-chuck pads 30 are pivotally mounted whereby the vacuum-chuck pads 30 can pivot to follow the curvature of the glass plates 3. The vacuum-chuck pads 30 are configured so that they operate as a result of the introduction and evacuation of compressed air that is fed from an evacuation/pressurization line not shown in the figures. When compressed air is introduced, the vacuum-chuck pads 30 are not pressed against the glass plate 3 by suction, and the vacuum-chuck pads 30 are free to pivot with respect to the glass surface. On the other hand, when compressed gas is withdrawn by the evacuation/compression line, the vacuum-chuck pads 30 are pressed against the glass plate 3, and the pivoting operation of the vacuum-chuck pads 30 is stopped and locked.

The depthwise position adjustment unit 28 basically includes a slide shaft 31, a slide guide 32 and a coil spring 33. The slide shaft 31 is configured and arranged to hold the vacuum-chuck device 27 at the top. The slide guide 32 is configured and arranged to house a locking mechanism that locks the sliding position of the sliding shaft 31. The coil spring 33 is disposed around the periphery of the slide shaft 31 and located between the vacuum-chuck pads 30 and the brackets 29.

The vacuum-chuck device 27 is disposed at the tip on this slide shaft 31. A stopper 34 is attached to the rear end for restricting the maximum protrusion position of the slide shaft 31. When the vacuum-chuck pads 30 are farthest from the glass plate 3, the stopper 34 is positioned at a position whereby it protrudes upwards from the top surface of the slide guide 32 as shown in Figure 9(A), and when the vacuum-chuck pads 30 are nearest the glass plate 3 (in contact therewith), the stopper 34 is in contact with the top surface of the slide guide 32 as shown in Fig 9(B).

The slide guide 32 is fixed to the flange 29 described above. The slide shaft 31 is guided and allowed to slide in the upwards and downwards directions in Figures 9(A) and (B). A locking mechanism is provided in this slide guide 32 for locking the sliding position of the slide shaft 31. The locking mechanism is configured so that it operates when compressed air is introduced or taken out through an evacuation/pressurization line not shown in the figures. When compressed air is introduced, the locking mechanism is released and the slide shaft 31 causes the vacuum-chuck pads 30 to approach the glass plate 3 as shown in Figure 9(B) due to the action of the coil spring 33, so that they are in their outermost protruding position. On the other hand, when compressed gas is taken out through the evacuation/pressurization line, the locking mechanism is actuated and the sliding position of the slide shaft 31 is locked.

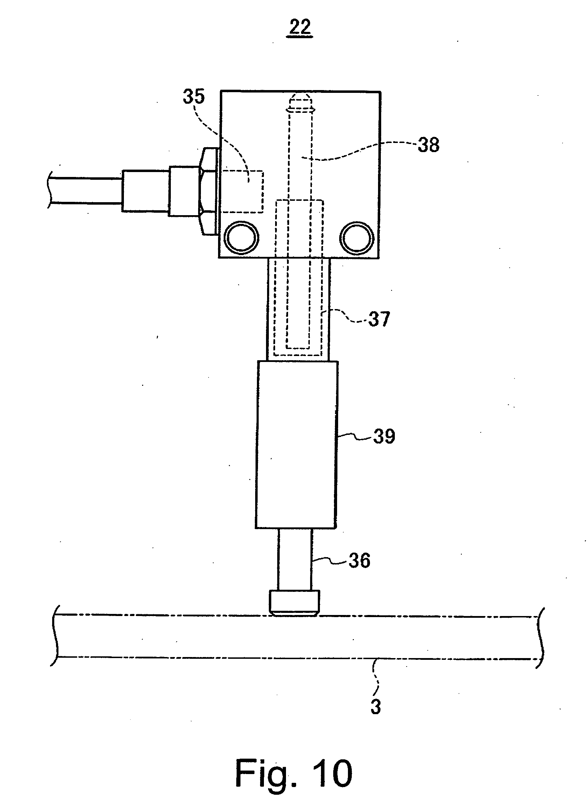

Each of the glass detection units 22, as shown in Figure 10, basically includes a detection switch 35, a detection rod 36 an indirect detector 37, a compression spring 38, and a detector body 39. The detection switch 35 is configured and arranged to detect the presence of the glass plate 3. The detection rod 36 is configured and arranged to turn the detection switch 35 on and off. The indirect detector 37 is configured and arranged above the detection rod 36. Thus, the glass detection units 22 form a workpiece detection mechanism that is configured and arranged to detect the workpiece that is held by the holding mechanism (the vacuum-chuck device 27).

When one of the glass plates 3 is in contact with the tip of the detection rod 36, the detection rod 36 is depressed into the detector body 39. Meanwhile, the indirect detector 37 counters the urging force of the compression spring 38, pushing it upwards, and turning the detection switch 35 on. When the indirect detector 37 is urged downwards by the compression spring 38, it is separated from the detection switch 35, and the switch turns off. When the detection switch 35 is on, this means that one of the glass plates 3 is present, whereas when the switch is off, this means that one of the glass plates is not present.

In this embodiment, the glass plate detection units 22 are disposed in diagonal positions relative to each other so that, even when one of the glass plates 3 is in an inclined position, the presence of the glass plate 3 can be detected.

The glass holding position adjustment unit 23 includes an X-Y table that has the function of aligning the glass holding position in the transverse and longitudinal directions of the glass plate 3, which is held by the vacuum-chuck position adjustment units 21 described above, with respect to the reference holding position of the handling robot 2. The X-Y table basically includes a first table 40, a second table 41, a pair of X-axis guide rails 42, a pair of Y-axis guide rails 43, a plurality of linear guides 44 and a locking mechanism. The first table 40 is fixed on the hand frame 25. The second table 41 is fixed on the wrist part 6 of the handling robot 2. The X-axis guide rails 42 are fixed along the transverse direction of the glass (X direction) above the first table 40. The Y-axis guide rails 43 are fixed along the transverse direction of the glass (Y direction) below the second table 41. The linear guides 44 are provided so that they can slide in both directions of the X-axis guide rails 42 and Y-axis guide rails 43. The locking mechanism locks the sliding of the X-Y table in the X and Y directions. Thus, the glass holding position adjustment unit 23 also form part of the workpiece position adjustment mechanism that is configured and arranged such that a workpiece holding position in which the workpiece is held by the holding mechanism (the vacuum-chuck device 27) is adjustable with respect to the robot 2 in both the longitudinal direction and the transverse direction.

The locking mechanism acts as a result of the introduction of compressed air supplied from an evacuation/pressurization line (not shown in the figures), thereby locking and preventing sliding, while also allowing sliding of the first table 40 in the X direction or Y direction with respect to the second table 41. Since the linear guides 44 are shared, the first table 40 slides with respect to the second table 41 so that sliding in one direction is not possible unless sliding in the other direction is first locked. For this reason, for example, the first table 40 is moved in the X direction with respect to the second table 41 only after the sliding in the Y direction is locked, and the first table 40 is moved in the Y direction with respect to the second table 41 only after the sliding in the X direction is locked.

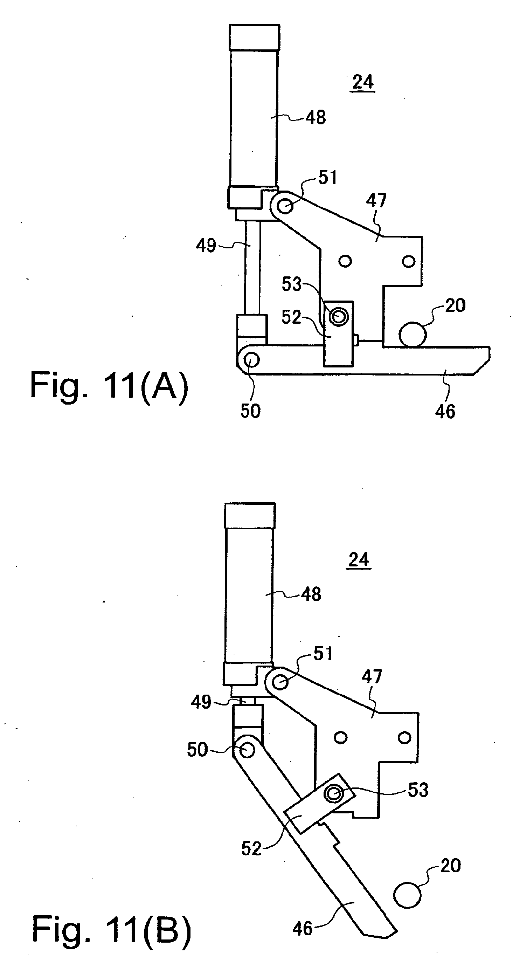

The partitioning plate lowering units 24 are provided at the tips of the substantially L-shaped support arms 45 that are fixed so that they extend in the transverse direction of the glass (X direction in Figure 6) from each of the attachment arms 26 provided on the hand frame 25. Each of the partitioning plate lowering units 24, as shown in Figure 11, basically includes a first arm 46, a second arm 47 and a drive cylinder 48. The first arm 46 is configured and arranged to pop up the pop-up rods 20 of the glass partitioning plates 17 provided on the second pallets 5. The second arm 47 is configured and arranged as a mounting member supporting the first arm 46 and the drive cylinder 48. The drive cylinder 48 serves as the drive power source for rotating the first arm 46. Thus, the partitioning plate lowering units 24 form a partitioning plate lowering mechanism that is configured and arranged to detect the workpiece that is configured and arranged to engage at least one of the partitioning plates of the second pallet 5 to lower the partitioning plate from a non-spacing position to a spacing position in which the workpiece (the glass plate 3) is supported at the prescribed spacing from an adjacent workpiece on the second pallet 5.

The first arm 46 is attached to a tip of the rod 49 of the drive cylinder 48 by a pivot shaft 50. The second arm 47 is attached to the main end of the drive cylinder via a pivot shaft 51. The other end of the second arm 47 is linked to the first arm 46 by a linkage member 52 that is pivotally fixed about a pivot shaft 53. When the drive cylinder 48 operates to retract the rod 49, the first arm 46 that is rotatably attached to the tip of the rod 49 rotates around the shaft 53 that connects with the second arm 47. The pop-up rods 20 of the glass partitioning plates 17 are thus popped up by the first arms 46 along with the rotation of the first arms 46. As shown in Figures 4(B) and 4(C), the glass partitioning plates 17 are driven to rotate from a stand-by position in which they do not separate the glass plates 3 to a partitioning position in which they are between the glass plates 3.

A rotating mechanism 60 is provided at the tip of the wrist part 6 of the handling robot 2 for rotating the glass transfer device 7. The rotating mechanism 60 has the function of changing the orientation of the glass plates 3 by 90° when the operation to correct the glass holding position is to be carried out on the glass plate 3 that has been held by the vacuum-chuck position adjustment units 21.

The handling robot 2 equipped with the glass transfer device 7 of the present invention (as discussed above) receives instructions from a controller CPU as seen in Figure 1. The controller CPU then operates the glass transfer device 7 that attached to the wrist part 6 in accordance with the instructions, as the handling robot 2 moves back and forth over the rails 1.

The controller CPU advantageously includes a microcomputer with a transport control program that controls the handling robot 2 and the glass transfer device 7 as to carry out the glass transfer method as discussed below. The controller CPU can also include other conventional components such as an input interface circuit, an output interface circuit, and storage devices such as a ROM (Read Only Memory) device and a RAM (Random Access Memory) device. The memory circuit stores processing results and control programs are run by the processor circuit. It will be apparent to those skilled in the art from this disclosure that the precise structure and algorithms for the controller CPU can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

Next, a glass transfer method will be described in which the glass transfer system and the glass transfer device described above are used in order to transfer glass plates 3 from the first pallets 4 to the second pallets 5.

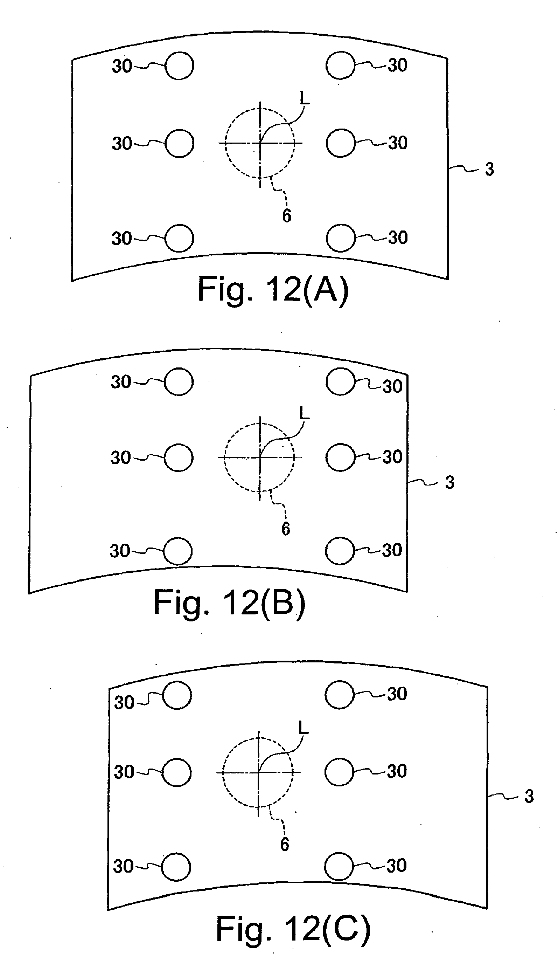

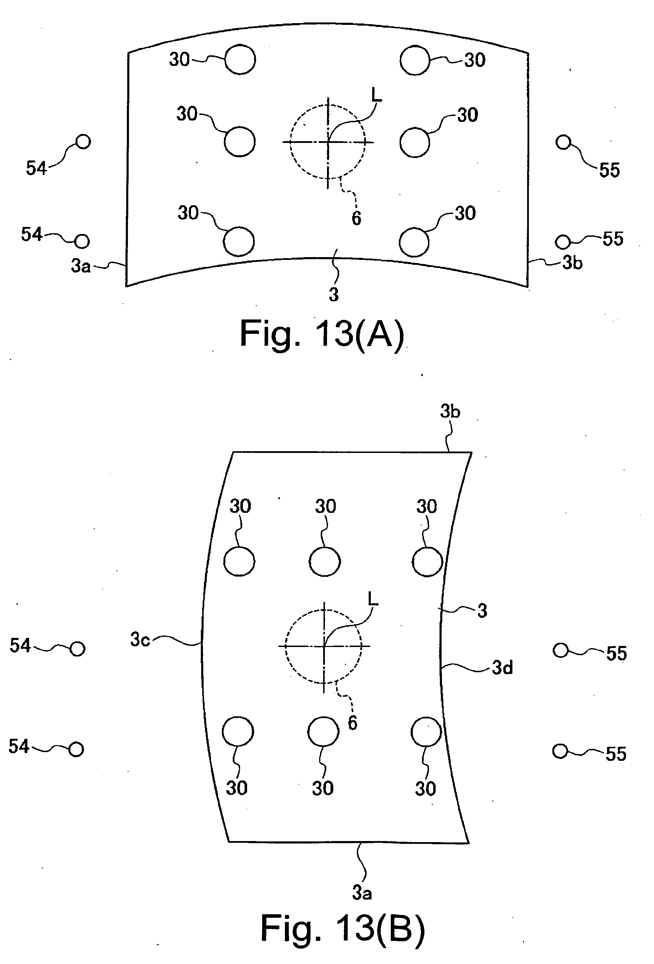

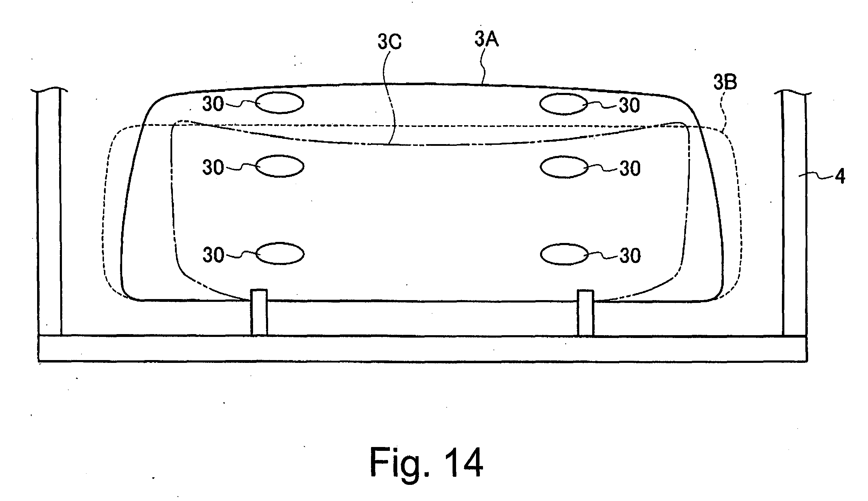

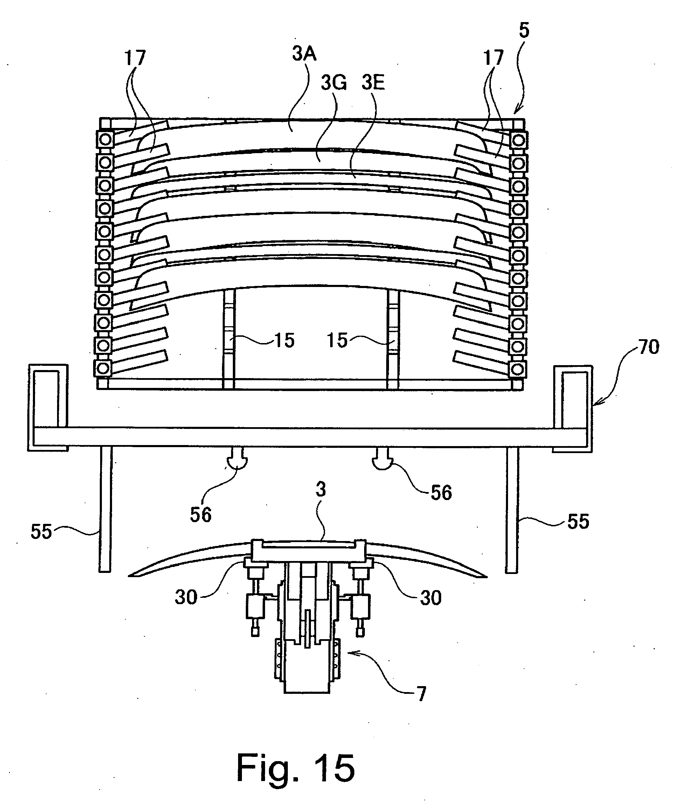

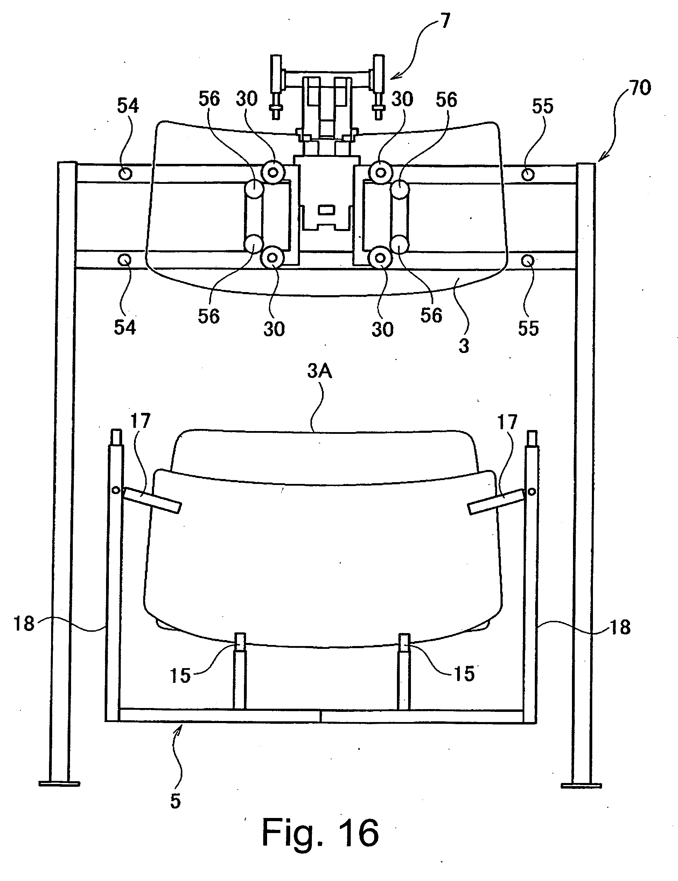

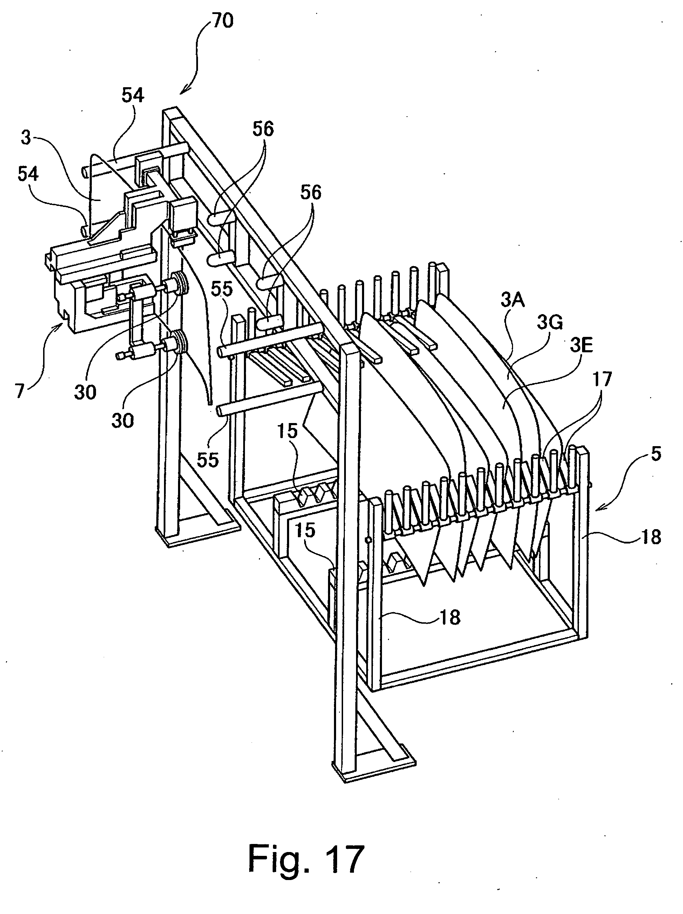

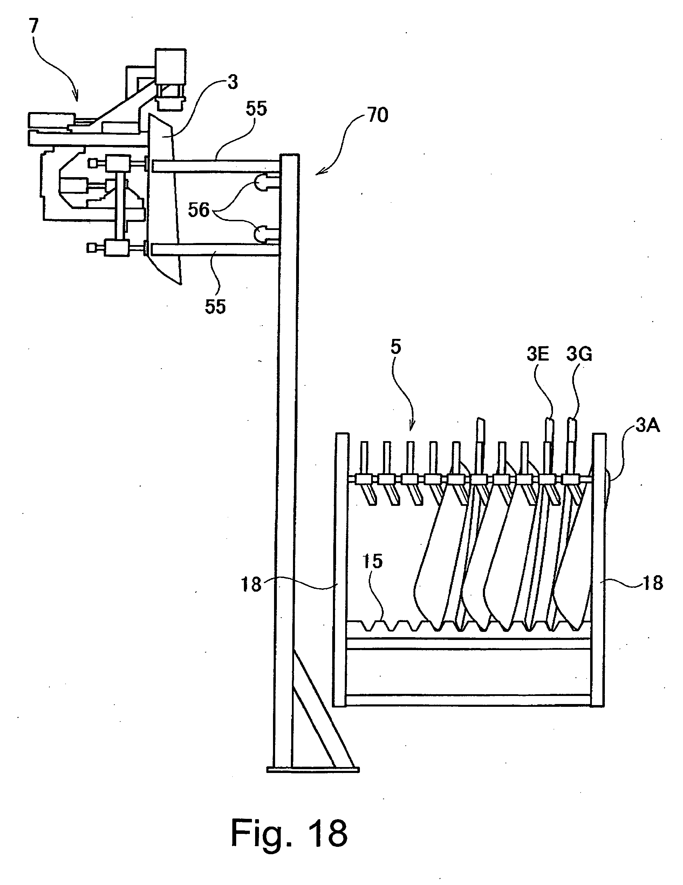

Figures 12(A) to 12(C) are schematic diagrams showing the glass holding position and the reference holding position of the robot 2 for different orientations of one of the glass plates 3. Figure 12(A) shows a condition in which the glass holding position corresponds to the reference holding position of the robot 2. Figure 12(B) shows a condition in which the glass holding position is shifted or offset to the right in the longitudinal direction of the glass plate 3 with respect to the reference holding position. Figure 12(C) shows a condition in which the glass holding position have shifted or offset to the left in the longitudinal direction of the glass plate 3 with respect to the reference holding position. Figures 13(A) and 13(B) shows an adjustment method in which the glass holding position is adjusted in the longitudinal direction of the glass plate 3 and the transverse direction of the glass plate 3 to match the reference holding position. Figure 13(A) shows positional adjustment in the longitudinal direction of the glass plate 3 to match the reference holding position of the robot 2. Figure 13(B) shows positional adjustment in the transverse direction of the glass plate 3 to match the reference holding position of the robot 2. Figure 14 shows a condition in which different glass plate types for different vehicle types or models are held by the vacuum-chuck position adjustment units 21. Figure 15 is a top plan view showing the operational state during the operation in which the glass holding position in the depthwise direction of the glass are aligned with respect to the reference holding position of the handling robot 2. Figure 16 is a front elevational view showing an operational state for an operation in which the glass holding position in the depthwise direction of the glass plates is aligned with respect to the reference holding position of the handling robot 2. Figure 17 is a perspective view showing the operational state for an operation in which the glass holding position in the transverse and longitudinal direction of the glass are aligned with respect to the reference holding position of the handling robot 2. Figure 18 is a side elevational view showing an operational state for an operation in which the glass holding position in the transverse and longitudinal directions of the glass are aligned with respect to the reference holding position of the handling robot.

The term "workpiece holding position" used herein denotes the position of the glass plate 3 (workpiece) in a state in which the glass plate 3 is held relative to the glass transfer device 7, as viewed from the handling robot 2. When repeating the operation in which the glass plate 3 is taken out from one of the first pallets 4 by the glass plate transfer device 7, variation in the workpiece holding position occurs as a result of variation in part precision and assembly precision of the pallets 4. The robot reference holding position is the position of the glass plate 3 in a state in which the glass plate 3 is held by the glass transport device 7 relative to the handling robot 2, as viewed from the handling robot 2. Thus, the robot reference holding position refers to the proper position of the glass plate 3 for allowing proper insertion of the glass plate 3 into one of the second pallets 5 during the operation in which the glass plate 3 is inserted into a second pallet 5 by the handling robot 2. There are cases where variation in the glass holding position occurs as a result of variation in the pallets 4, as mentioned above. Thus, there are cases in which the glass plate 3 cannot be held in the proper position for insertion of the glass plate 3 into the second pallet 5. However, when the glass holding position is aligned with the robot reference holding position, a preset instruction operation can be carried out by the robot 2 in order to allow insertion of the glass plate 3 into the proper position on the second pallet 5.

The handling robot 2 first receives instructions from the controller CPU and moves to the position where a selected one of the first pallets 4 is disposed in accordance with a vehicle production sequence. For example, the handling robot 2, as shown in Figure 1, moves along the robot transport path along the rails 1 described above to the position of the first pallet 4D, which is closest to the entry position of the second pallet 5, and stops at a position opposite the first pallet 4D. Next, the glass transfer device 7 that is attached to the wrist part 6 of the handling robot 2 moves towards the glass plate 3D that is supported on the first pallet 4D.

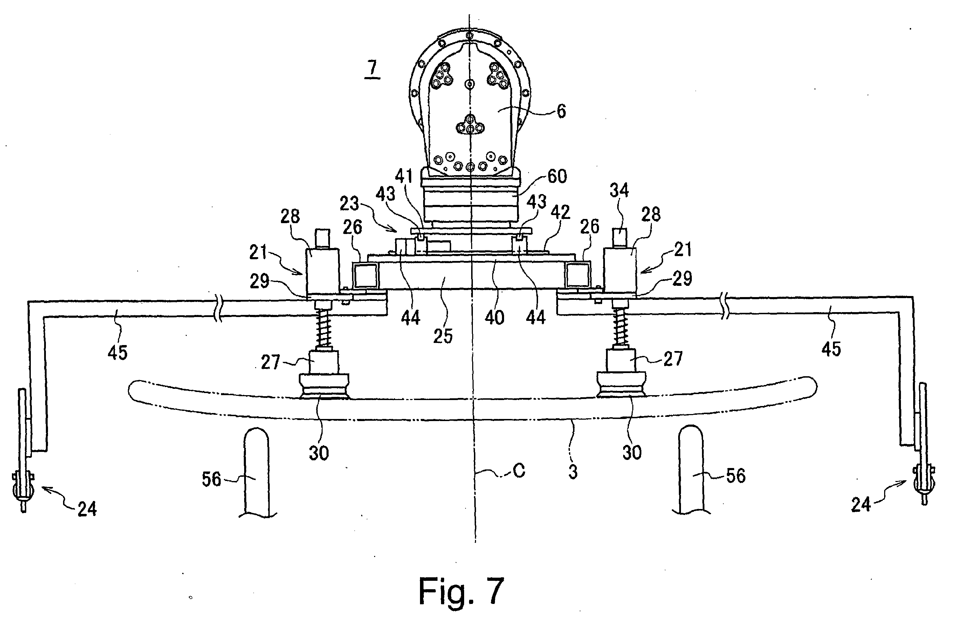

When the glass transfer device 7 approaches the glass plate 3D, as shown in Figures 6 and 7, the vacuum-chuck pads 30 of the vacuum-chuck position adjustment units 21 come into contact with the glass plate 3. At this time, the locks in the vacuum-chuck devices 27 and the position adjustment mechanisms 28 are each in a released state. Thus, the vacuum-chuck pads 30 are pivoted, oscillated, and advanced or retracted with respect to the glass plate 3 in accordance with the contour (curves) of the glass plate 3. When the vacuum-chuck pads 30 thus conform to the contour of the glass plate 3, the vacuum-chuck devices 27 are locked, and the glass plate 3 is handled by the vacuum-chuck pads 30. The sequence of operations of the handling robot 2 is programmed beforehand for the first pallet 4, and the same operations are carried out during transport of glass plates 3 for the same vehicle model. In other words, the position of the handling robot 2 and the glass transfer device 7 remain the same in each case when the glass plates 3 are held and transported. The approach position in which the glass transport device 7 holds the glass plate 3 changes each time, as does the position of the handling robot 2 in the depthwise direction of the first pallet 4. However, the controller CPU for the system counts the number of remaining glass plates on the first pallet 4. Thus, the controller CPU is configured so that the approach position is automatically determined in accordance with the remaining number of sheets.

Subsequently, the glass plate 3 that has been held by the vacuum-chuck pads 30 is lifted upwards from and out of the first pallet 4. The glass plate 3 is then transported along the rails 1 by the robot 2 to the ends of the rails 1 that is adjacent to the second pallet 5 that is located at the ends of the rails 1. In particular, as shown in Figures 15 to 17, a reference pin fixing support 70 is located adjacent the second pallet 5 that is to be loaded. The reference pin fixing support 70 has a plurality of reference pins 54, 55 and 56 that form a positional adjustment part for contacting the glass plate 3 (workpiece) to align the workpiece in a depthwise direction of the workpiece, a widthwise direction of the workpiece and a longitudinal direction of the workpiece, as discussed below.

As shown in Figures 7, 15 and 16, the glass plate 3 is moved at a prescribed distance toward the reference pins 56 for adjusting the position in the depthwise direction of the glass plates 3. The reference pins 56 are provided on an upper part of the reference pin fixing support 70 that is disposed in front of the second pallet 5. Advantageously several, e.g., four, reference pins 56 are provided at a prescribed spacing for contacting the front surfaces 3 of the glass plates 3 to adjust the position in the depthwise direction of the glass plates 3. When one of the glass plates 3 is pressed against the reference pins 56 for adjusting the position in the depthwise direction of the glass plates, the glass holding position in the depthwise direction of the glass is aligned with respect to the reference holding position of the handling robot 2 (center position C of the wrist part 6). When this glass holding position and the reference holding position of the handling robot correspond, the depthwise position adjustment unit 28 is locked, and the glass holding position is fixed.

The conditions in which the glass plate 3 are handled by the vacuum-chuck position adjustment units 21 in this manner includes a condition where the glass holding position of the glass plate 3 matches the actually vacuum-chuck positions set by the reference holding position of the handling robot 2 (center position C of the wrist part 6) as seen in Figure 12(A), and a condition where the glass holding position of the glass plate 3 is shifted to the left or right in the longitudinal direction of the glass with respect to the reference holding position of the handling robot 2 as seen in Figures 12(B) and (C). Positional shifting arises as a result of variation in the assembly precision of the first pallet 4, variation in the size of each of the first pallets 4, or variation in placement of the glass plates 3 on the first pallets 4.

Next, the detection rods 36 of the glass detection units 22 come into contact with the glass plate 3. The controller CPU then determines whether the vacuum-chuck position adjustment units 21 are holding one of the glass plates 3 using the glass detection units 22. If one of the glass plates 3 is not detected, then one of the glass plates 3 has not been vacuum-chucked. Thus, the operation involving vacuum chucking of the glass plate 3 is carried out again.

If vacuum-chucking of the glass plate 3 by the vacuum-chuck devices 27 is confirmed, then locking of the glass holding position adjustment unit 23 in the widthwise direction (X direction in Figure 6) of the glass plates is released (with the glass locked in the longitudinal direction), and the glass transport device 7 is in a condition whereby it is free to move in the longitudinal direction of the glass plate 3. As a result, a condition is produced in which the first table 40 can move in the longitudinal direction of the glass relative to the second table 41 that is fixed on the wrist part 6.

Now, the glass plate 3 that is handled by the vacuum-chuck position adjustment units 21 is centered in the longitudinal direction of the glass plate 3 using the reference pins 54 and 55 that are provided on opposite sides of the glass plate 3. In particular, the glass plate 3 has its opposite ends 3a and 3b being aligned substantially linearly in the transverse direction of the glass plate 3, as shown in Figures 13(A), 17 and 18. Thus, the handling robot 2 moves the glass plate 3 that is handled by the vacuum-chuck position adjustment units 21 toward the reference pins 54 and 55 by the same predetermined distance for adjusting the position in the longitudinal direction of the glass plate 3. The reference pins 54 and 55 are disposed at equivalent distances in the transverse direction of the glass from the reference holding position of the handling robot 2 when positional adjustment is to be carried out for adjusting the position in the longitudinal direction of the glass plates. Thus, the distance that the handling robot 2 moves is set to be approximately the same as the distance from the reference pin 54 or 55 for adjusting the position in the longitudinal direction of the glass plates to the end 3a or 3b when the glass holding position corresponds to the reference holding position of the handling robot 2.

When the ends 3a and 3b of the glass plate 3 are at an angle with respect to the longitudinal so that the distances from the respective reference pin 54 and 55 are different for adjusting the position in the transverse/longitudinal direction of the glass plates to the ends 3a and 3b of the glass plate 3, then the distance from the ends 3a and 3b of the glass plate 3 to the nearest reference pin 54 (55) is conveniently set to be the distance that the handling robot 2 moves for adjusting the position in the transverse/longitudinal direction of the glass plates. When the position of the reference pins 54 and 55 for adjusting the position of the glass plate 3 in longitudinal direction of the glass plates, the distances of movement of the handling robot 2 are set in this manner. Then, as shown in Figures 12(B) and 12(C), when the glass holding position and the reference holding position of the handling robot 2 are off, one of the ends 3a and 3b of the glass plate 3 will come into contact with one set of the reference pins 54 and 55 for adjusting the position in the longitudinal direction of the glass plate 3. As a result, the first table 40 will slide correspondingly in the longitudinal direction of the glass relative to the second table 41, so that the glass holding position aligns with respect to the reference holding position of the handling robot 2.

Next, after the glass plate 3 has been rotated by 90° using the rotating mechanism 60, the lock for the vertical direction (Y direction in Figure 6) of the glass holding position adjustment unit 23 is released (locked in the longitudinal direction of the glass), and the glass transport device 7 is freed so that the glass transport device 7 can move in the transverse direction of the glass plate 3. As a result, the first table 40 is freed so that the first table 40 can move in the transverse direction of the glass plate 3 relative to the second table 41 fixed on the wrist part 6.

Now the glass plate 3 is centered with respect to the two opposite longitudinal ends 3c and 3d of the glass plate 3. The two opposite longitudinal ends 3c and 3d have a substantially curved shape along the longitudinal direction of the glass plates 3. The glass plate 3 is handled by the vacuum-chuck position adjustment units 21, as shown in Figure 13(B), to be moved approximately the same predetermined distance in the direction of the reference pins 54 and 55 for adjusting the position in the transverse/longitudinal direction of the glass plate 3. The reference pins 54 and 55 are provided at the top of the reference pin fixing support 70. The distance that the handling robot 2 moves is set to be approximately equivalent to the distance from the reference pins 54 and 55 for adjusting the position in the transverse/longitudinal direction of the glass plates to the ends 3c and 3d when the reference holding position of the handling robot 2 corresponds to the glass holding position. When the distances from each of the reference pins 54 and 55 are different for adjusting the position in the transverse direction of the glass plates to the ends 3c and 3d because the ends 3c and 3d have curved shapes, it is advantageous for the distance from the ends 3c and 3d to the nearest reference pins 54 (55) for adjusting the position in the transverse direction of the glass plates to be set at the distance that the handling robot 2 is to move. When the position of the reference pins 54 and 55 are set in this manner for adjusting the position in the transverse/ direction of the glass plates and the distance of movement of the handling robot 2, one of the ends of the glass plate 3 will contact one set of the reference pins 54 and 55 for adjusting the position in the transverse direction of the glass plates when the glass holding position and the reference holding position of the handling robot 2 are off in the transverse direction of the glass. As a result, the first table 40 will slide correspondingly in the transverse direction of the glass relative to the second table 41, so that the glass holding position aligns with respect to the reference holding position of the handling robot 2.

Thus, when the glass holding position in the transverse and longitudinal directions of the glass corresponds with respect to the reference holding position of the handling robot 2, the glass holding position adjustment unit 23 is locked, and sliding of the first table 40 with respect to the second table 41 in the transverse direction and longitudinal direction of the glass is prevented from occurring. As a result, the glass holding position in the depthwise, transverse, and longitudinal directions of the glass and the reference holding position of the handling robot are subjected to positional correction prior to transfer to the second pallet 5, thereby completing the operation to correct the glass holding position.

Next, assuming the glass plate 3 has been properly positioned on the handling robot 2, the glass plate 3 is then transferred to the second pallet 5 by the handling robot 2. After placing the glass plate 3 in the prescribed position on the second pallet 5, the vacuum of the vacuum-chuck pads 30 are released and the glass plate 3 is placed on the second pallet 5. The partitioning plate lowering unit 24 then operates to lower a pair of the glass partitioning plates 17, and the space between each of the glass plates 3 is partitioned by the glass partitioning plates 17. In the same manner as the above-described glass removal operation whereby the glass plates 3 are taken out from the first pallet 4, the handling robot 2 is programmed in advance to carry out the operation to insert the glass plate 3 into the second pallet 5 and the operation to adjust the glass position.

In this manner, a routine is repeated in which the prescribed glass plate 3 is taken out from the first pallet 4 in accordance with the vehicle assembly production sequence, an operation to correct the glass holding position is carried out in which the glass holding position of the glass plate 3 is made to correspond with respect to the reference holding position of the handling robot 2, and the glass plate is then transferred to the second pallet 5 in accordance with the assembly production sequence. Once the second pallet 5 is full of glass plates 3, the pallet 5 is moved to the exit position, and the next second pallet 5 is moved to the glass transfer position. All of the glass plates 3 are thereby transferred by repeating this routine.

In Figure 14, the sizes of the glass plates 3A, 3B, and 3C are different in cases where the vehicle type is different. Of the six vacuum-chuck pads 30, only a few are used in order to vacuum-chuck the glass plates 3A, 3B, or 3C. For example, the glass plates 3B and 3C are small and are used for small-size vehicles, unlike the glass plates 3A, which are large and are used for mid-size vehicles. Consequently, the glass plates 3B are held using only four vacuum-chuck pads 30 of the six vacuum-chuck pads 30.

Thus, in the correction operation whereby the glass holding position in the transverse and longitudinal directions of the glass plates 3 are adjusted to align with respect to the reference holding position of the handling robot 2, the two opposite linear ends 3a and 3b arranged in a substantially straight line in the transverse direction of the glass in Figure 13(A) initially come into contact with the positional adjustment reference pins 54 and 55. Subsequently, the two opposite ends 3c and 3d that form a curved shape in the longitudinal direction of the glass in Figure 13(B) come into contact with the positional adjustment reference pins 54 and 55 for adjusting the position in the transverse/longitudinal direction of the glass plates. This sequence of this correction operation is advantageous for the reasons described below.

Specifically, in contrast to the sequence described above, if the curved ends 3c and 3d were initially abutted against the reference pins 54 and 55 for adjusting the position in the transverse/longitudinal direction of the glass plates, and then the linear ends 3a and 3b come into contact with the reference pins 54 and 55 for adjusting the position in the transverse/longitudinal direction of the glass plates, then position in which the reference pins 54 and 55 strike the curved ends 3c and 3d will be different each time. Although the distance and position that the handling robot 2 travels with respect to the reference pins 54 and 55 is the same each time for adjusting the position in the transverse/longitudinal direction of the glass plates, because the curved ends 3c and 3d have a curved shape, variation in positional adjustment will be great due to the differences in pin striking positions. For this reason, the position of the glass plate 3 after striking the pins will be outside the allowed range of positions, and the proper position will not be taken. In contrast, when the straight or linear ends 3a and 3b make initial contact, the pin striking position will be within the allowed range of positions of the glass plate because the difference in dimensions of the linear regions is small, although there will be some degree of variation. In addition, as shown in Figure 14, the glass plates 3A, 3B, and 3C have different curved ends that vary to some degree depending on differences in the vehicle type. Thus, the undesirable situation described above occurs to a dramatic degree when the ends that have a curved shape are the first to contact the pins and a correction operation is carried out. Consequently, it is advantageous to perform the correction operation in the sequence described in the above embodiment.

In accordance with the glass transfer method of the invention, an operation to correct the glass holding position is carried out. In this operation, the glass holding position, in which the glass transfer device 7 holds the glass plate 3, is made to align with respect to the reference holding position of the handling robot 2. Therefore, the operation to correct the glass holding position can be carried out in order to eliminate variation in the position in which the first pallet 4 is disposed on the platform 8, variation in the position in which the glass plates 3 are placed on the first pallets 4, or variation in the size of the first pallets 4. Consequently, the glass plates 3 that are taken out from the first pallet 4 can be placed properly on the second pallet 5 without using expensive equipment such as visual sensors.

By using the glass transfer method of the present invention, the operation to adjust the glass position involves positioning the glass plates in the depthwise direction, transverse direction, and longitudinal direction of the glass plates. Adequate positional correction can therefore be carried out, and the glass plates 3 can be uniformly placed on the second pallet 5.

In accordance with the glass transfer method of the invention, it is also possible to align the glass holding position with respect to the reference holding position of the robot when the two linear ends 3a and 3b in the transverse direction of the glass plates 3 initially come into contact with the reference pins 54 and 55. Because the two curved ends 3c and 3d extending in the longitudinal direction of the glass plates 3 come into contact with the reference pins 54 and 55, and the glass holding position is aligned with respect to the reference holding position of the robot, accurate correction operations can be carried out on multiple types of glass plates 3 having varying curved shapes.

After placing the glass plate 3 held by the glass transport device 7 on the second pallet 5 in accordance with the glass transfer method of the invention, two of the glass partitioning plates 17 on the second pallet 5 are lowered so that the glass plates 3 are placed at the prescribed spacing, thereby completely eliminating manual work on the part of an operator.

In accordance with the glass transfer system of the invention, the glass transfer device 7 has a position adjustment unit or device that is mechanical and devoid of any complicated and difficult processes in which the glass plate holding positions are subjected to image processing by using an image capture device such as a visual sensor. Consequently, the glass holding position in which the glass plate 3 is held by this device can be aligned with respect to the reference holding position of the handling robot 2, allowing easy maintenance and decreasing equipment costs. Moreover, each of the glass plates 3 can be arranged by being transferred from the first pallet 4 to the second pallet 5.

The glass transfer device of the invention has the vacuum-chuck position adjustment units 21 with the vacuum-chuck devices 27 that hold the glass plates 3 and the depthwise position adjustment unit 28 whereby the glass holding position in the depthwise direction of the glass plate 3 are made to correspond to the reference holding position of the robot. The glass holding position adjustment unit 23 adjusts the glass holding position in the transverse and longitudinal directions of the glass plates 3 are made to correspond to the reference holding position of the handling robot 2. Consequently, the cost of the glass transport device 7 can be decreased because positional adjustment is carried out by mechanically without complicated and troublesome processes that involve image processing of glass holding position by using an imaging device such as a visual sensor. Moreover, it is possible to transfer the glass plates from the first pallet 4 to the second pallet 5.

In accordance with the glass transfer device of the invention, the rotating mechanism 60 is provided that rotates the direction of the glass plate 3 that has been held by the vacuum-chuck position adjustment units 21, so that positional deviations can be corrected in both the transverse and longitudinal directions of the glass plates 3.

In accordance with the glass transfer device of the invention, the glass plate 3 that is held by the vacuum-chuck position adjustment units 21 comes into contact with reference pins 54, 55 and 56, so that the glass plates are positioned in the depthwise direction, transverse direction, and longitudinal direction of the glass plates 3 allowing for positional variations to be corrected using a simple mechanism, and equipment costs to be reduced.

The glass transfer device of the invention has the partitioning plate lowering units 24 whereby, after arranging the glass plate 3 that has been held by the vacuum-chuck position adjustment units 21 on the second pallet 5, the glass partitioning plates 17 that have been provided on the second pallet 5 are lowered, thereby arranging and separating the glass plates 3 at a prescribed spacing. Consequently, operations that have been previously carried out manually are automated, thereby improving production performance.

As described above, the invention is not restricted to examples in which the reference pin fixing support 70 is provided at a position above the second pallet 5. Positioning can also be carried out immediately after discharge by providing the support at the stage prior to the discharge opening for the first pallet 4. Workpieces that are to be handled are also not restricted to glass plates, and steel or resin panel parts and the like may also be used. However, the material is to have a degree of rigidity whereby the workpiece itself will not deform during contact of the workpiece with the position adjustment mechanism.

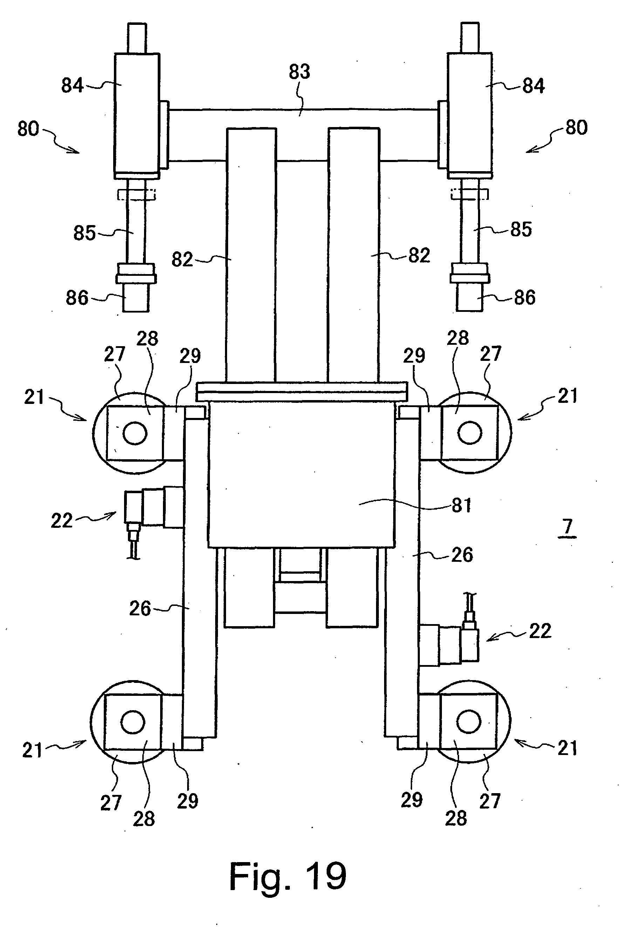

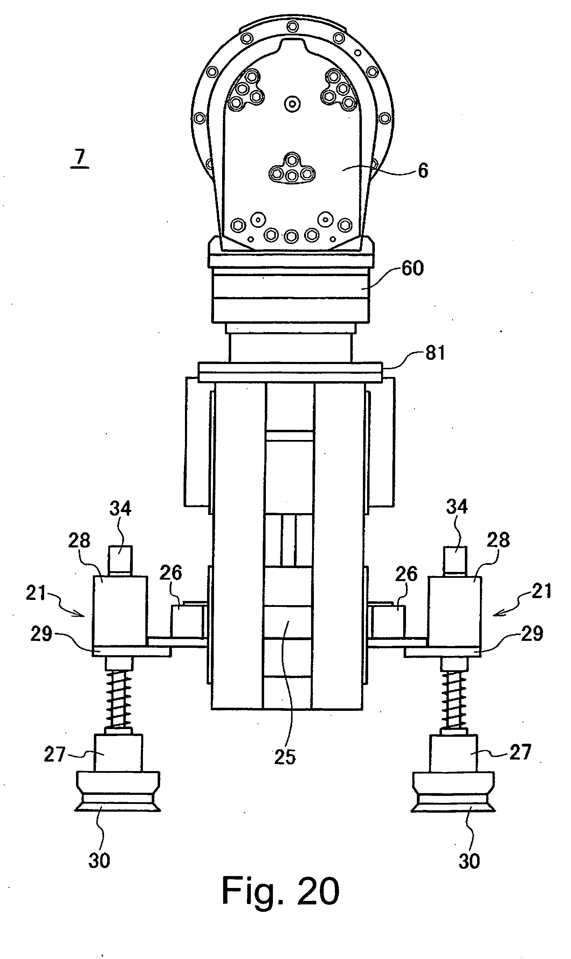

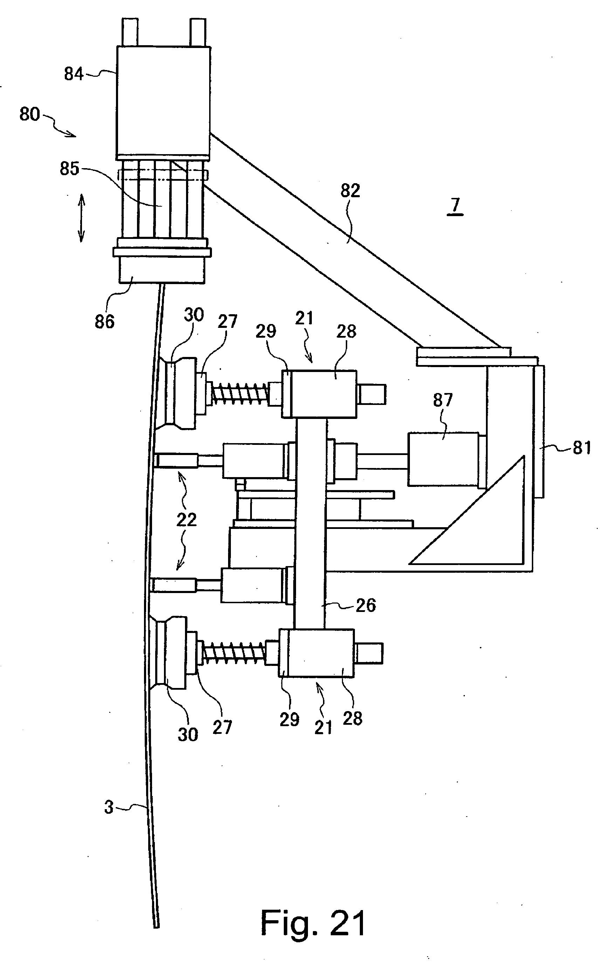

Figures 19 to 21 show an example in which two glass pressure units 80 are attached to the handling robot 2 in order to prevent the glass plates 3 from inclining towards the center of the pallet (glass arrangement direction) and preventing vacuum chucking from being performed when the glass plates 3 disposed on the first pallet 4 are handled by the vacuum-chuck pads 30.

The glass transport device 7 attached to the handling robot 2 in Figures 19, 20 and 21 is substantially the same as the embodiment described above, although the glass holding position adjustment unit 23 described above is not shown in order to simplify the description. It will be apparent from this disclosure that the glass holding position adjustment unit 23 is conveniently provided in the same manner as described above.

The glass pressure units 80 are supported on a device attachment plate main body 81 that is fixed to the wrist 6 of the handling robot 2 by two arms 82 and a linkage arm 83. The glass pressure units 80 are fixed to each end of the linkage arm 83 that is attached to the tops of the two arms 82. The two arms 82 are fixed to the device attachment plate main body 81, which is itself fixed to the wrist 6 of the handling robot 2. The glass pressure units 80 have drive cylinders 84 that operate by air or oil and that are part of an upward and downward movement mechanism. The drive cylinders 84 have cylinder rods 85 with pads 86 that are formed from urethane or the like. The pads 86 are attached to the tops of the cylinder rods 85 of the drive cylinders 84. The glass pressure units 80 are configured so that the pads 86 advance and withdraw by the advancing and withdrawing operation of the cylinder rods 85 with respect to the top end 3e of a glass plate 3 that is placed upright on the first pallet 4.

The glass pressure unit 80 is disposed above the glass plate 3 that is placed upright on the first pallet 4. The drive cylinders 84 operate prior to the handling of the glass plate 3 by the vacuum-chuck pads 30 to cause the pads 86 to descend and to press against the upper end 3e of the glass plate 3. By this arrangement, the glass plate 3 is stabilized without inclination when the upper end 3e is pressed upon by the pads 86 while the lower end 3d is pressed upon by the glass placement grooves 10 on the first pallet 4 described above. At the point when the glass plate 3 is stably held, the glass plate 3 is handled by the vacuum-chuck pads 30 when the vacuum-chuck position adjustment units 21 approaches the glass plate 3 via a slide device 87 attached to the device removal plate main body 81. At this time, the glass plate 3 is pressed onto the first pallet 4 by the glass pressure unit 80, and thus the glass plate 3 is stably handled by the vacuum-chuck pads 30 without inclining in the depthwise direction of the plates.

In accordance with this embodiment, the glass pressure unit 80 is attached to the handling robot 2, so that when the glass plates 3 is to be handled by the vacuum-chuck position adjustment units 21 and taken out from the first pallet 4, the glass plates 3 can be stably held and reliably handled by vacuum chucking. Moreover, in accordance with this embodiment, it is not necessary to use a device for holding the glass plates 3 on each of the first pallets 4, thereby achieving a reduction in equipment costs.

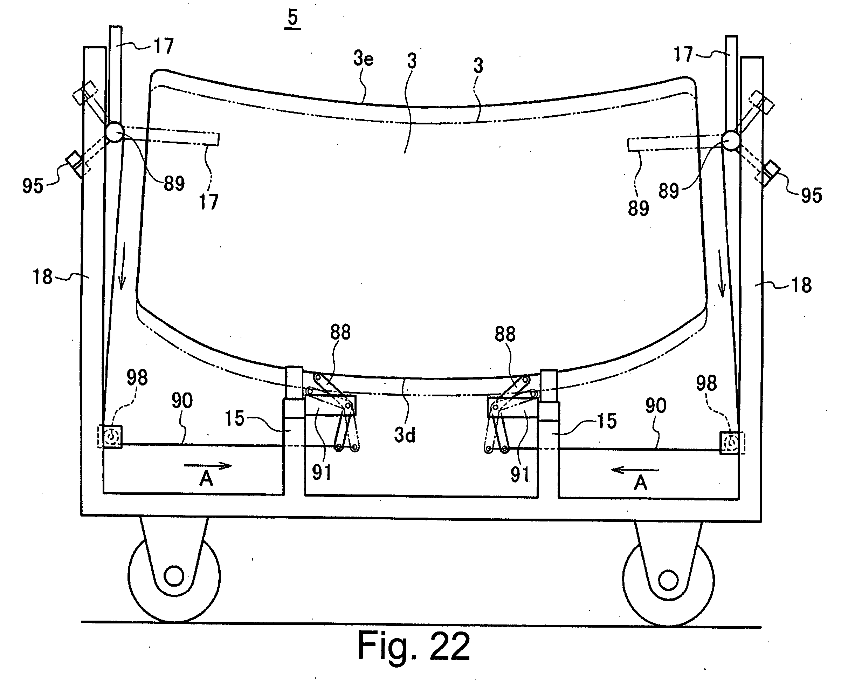

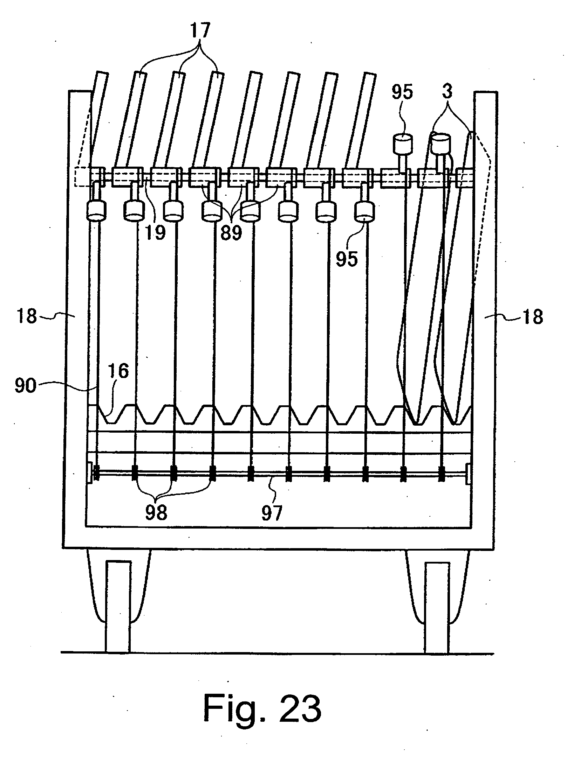

Figures 22 and 23 show a case in which a partitioning plate lowering unit is provided on the second pallet 5 so that when the glass plates 3 that has been taken out from the first pallet 4 is to be inserted into the second pallet 5, the partitioning plate is automatically lowered in conjunction with the weight of the inserted glass plate. In the above embodiment, after insertion of the glass plate 3 into the second pallet 5, the glass partitioning plate 17 is lowered by the partitioning plate lowering unit 24 attached to the handling robot 2. In this embodiment, however, the weight of the glass plate 3 is utilized in order to lower the glass partitioning plates 17.

The partitioning plate lowering unit of this embodiment has a link plate 88 that rotates under the weight of a glass plate 3 when the glass plate 3 is inserted into the second pallet 5, and a wire 90 that has one end fixed to the link plate 88 and another end fixed to a rotating member 89 on which the glass partitioning plate 17 is fixed.

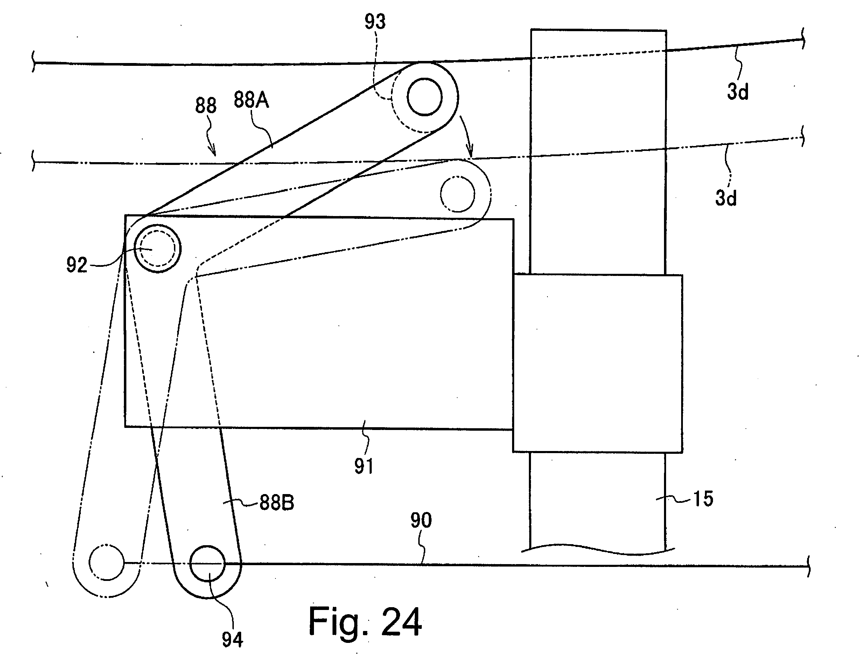

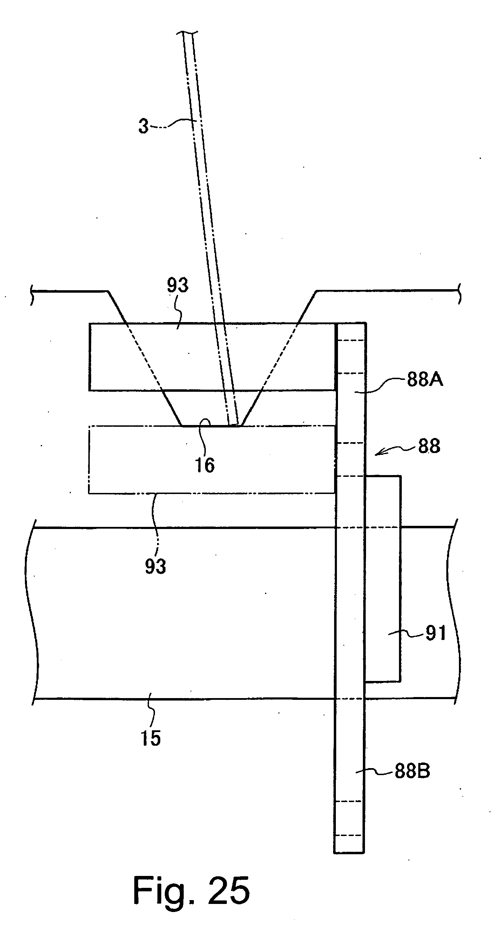

As shown in Figures 24 and 25, the link plate 88 has a first arm 88A that extends in one direction, and a second arm 88B that extends in another direction so that a flat, substantially V-shaped overall shape is produced. The link plates 88 are rotatably attached and allowed to rotate around the vertex that produces this V shape. The plates 88 are attached to flanges 91 that are fixed to each of a pair of glass placement/support members 15, 15 provided on the bottom of the pallet. Specifically, the vertex of the link plate 88 is attached to a rotational support shaft 92 mounted on the flange 91, thereby allowing free rotation of the link plate 88 with respect to the flange 91.

The tip of the first arm 88A of the link plate 88 has a roll 93 that abuts immediately in front of the position in which the lower end 3d of the glass plate 3, which is inserted into the second pallet 5, enters the glass placement groove 16 having a substantially tabular cross-section. This roll 93 causes the link plate 88 to rotate by abutting the glass plate 3, and is attached to the first arm 88A so that it can either rotate or not rotate. A wire attachment hole 94 for fixing one end of the wire 90 is formed on the top of the second arm 88B.

The link plates 88 are provided in the number required for partitioning the glass plates 3 that are inserted and placed on the second pallet 5 in the lengthwise direction of the glass placement/support member 15.

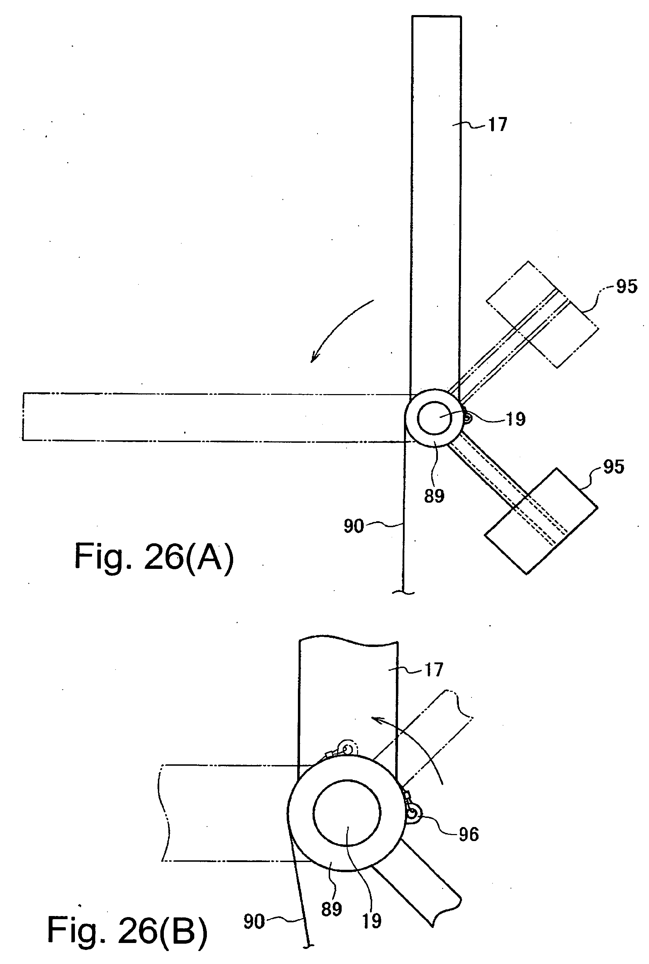

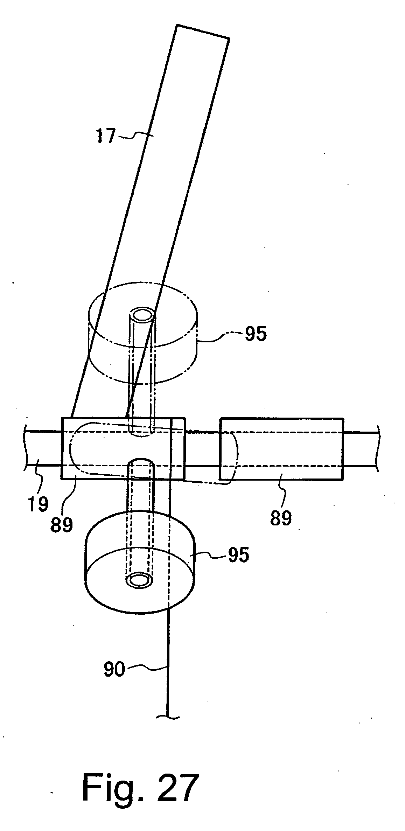

As shown in Figures 26 and 27, the glass partitioning plates 17 are joined by welding or the like to the rotating members 89 that are rotatably attached to the support shaft 19. The support shaft 19 is fixed between the pallet support columns 18. The glass partitioning plates 17, as in the embodiment described above, aid in partitioning the glass plates 3 that have been inserted into the second pallet 5. Similarly, the partitioning plates are provided in the number required to partition the multiple glass plates 3 that are to be inserted into the second pallet 5. In addition to the glass partitioning plates 17, the rotating member 89 also has a weight 95 for balancing the weight on the side of the roll 93 via a wire 90.

The wire 90 is fixed by having one end fastened to the wire attachment hole 94 of the link plate 88, whereas the other end is fixedly fastened to a wire fixing part 96 provided on the rotating member 89. The wire 90 between the link plate 88 and rotating member 89 is also suspended on a relay roll 98 that is rotatably attached to a shaft 97 fixed to the base end between the support columns 18. The wire 90 has a substantially L-shaped configuration when viewed from an overall perspective. The relay roll 98 and the wire 90 are similarly provided in the exact number required for partitioning the multiple glass plates 3 that are to be inserted into the second pallet 5.

When the glass plate 3 is inserted into the second pallet 5 having the partitioning plate lowering unit configured in this manner, the bottom edge 3d of the glass plate 3 is guided into the glass placement groove 16. As this occurs, the roll 93 that is provided on the link plate 88 continues to drop downwards. When the glass plate 3 is introduced into the second pallet 5 and the weight is received by the roll 93, the link plate 88 rotates around the rotating support shaft 92, and the wire 90 is pulled in the direction indicated by the arrow A in Figure 22. As a result, the wire 90 rotates the rotating member 89. The rotating member is rotatably attached to the support shaft 19 via the relay roll 98 that rotates with respect to the shaft 97. The glass partitioning plate 17 that is joined to the rotating member 89 is thus lowered in an approximately horizontal direction from its state before insertion of an upright glass plate, and the glass plate 3 that has been placed is thus supported on the glass placement groove 16.

In accordance with this embodiment, when glass plates 3 that are held in the glass transfer device 7 are placed on the second plate 5, the glass plates 3 are arranged at a prescribed spacing by the lowering of the glass partitioning plates 17 provided on the second pallet 5 in conjunction with the weight of the glass plates 3 on the pallet 5. Consequently, the dedicated partitioning plate lowering unit 24 used in the above embodiment is not necessary, equipment costs can be greatly decreased, and the device configuration can be simplified. In accordance with this embodiment, the above partitioning plate lowering unit 24 is not necessary, which also prevents the first pallet 4 and the partitioning plate lowering unit 24 from interfering with each other.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Also as used herein to describe the above embodiment(s), the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Thus, the foregoing descriptions of the embodiments according to the present invention are provided for illustration only, and not for the purpose of limiting the invention as defined by the appended claims.

## Claims

1. A workpiece transfer method comprising:
providing a first pallet (4) containing a workpiece (3) at a first location adjacent to a robot (2) having a transfer device (7) comprising a hand frame (25) that is movably attached to the robot (2) to pick up the workpiece (3);
transporting the workpiece (3) from the first pallet (4) using the transfer device (7) to a positional adjustment part (54, 55) in response to pre-programmed operations of the robot (2); and
performing a workpiece alignment operation to align a workpiece holding position in which the workpiece (3) is held by the hand frame (25) relative to the robot (2);
**characterised in that** the alignment operation comprises:
setting a prescribed distance corresponding approximately to a distance from an end of the workpiece (3) to the positional adjustment part (54, 55) for a reference holding position of the robot (2); and
moving the robot (2) towards the positional adjustment part (54, 55) by the prescribed distance such that the end of the workpiece (3) contacts the positional adjustment part (54, 55) thereby to move the hand frame (25) relative to the robot (2) and to align the workpiece holding position with the reference holding position.

2. A method as claimed in claim 1 wherein providing the first pallet (4) containing the workpiece (3) involves the workpiece being a sheet-form workpiece having a substantially rectangular shape; and
performing the workpiece alignment operation includes positioning the workpiece (3) in a depthwise direction of the workpiece, a widthwise direction of the workpiece and a longitudinal direction of the workpiece by contacting the workpiece that is held by the transfer device with the positional adjustment part (54, 55).

3. A method as claimed in claim 2 wherein:
providing the first pallet (4) containing the workpiece (3) involves the workpiece having a pair of opposing liner edges and a pair of opposing curved edges; and
performing the workpiece alignment operation includes first contacting the linear edges with the position adjusting part (54, 55) and then contacting the curved edges with the position adjusting part (54, 55) to align the workpiece holding position in which the workpiece is held by the transfer device with a reference holding position of the robot (2).

4. A method as claimed in any preceding claim comprising:
providing a second pallet (5) configured to receive the workpiece (3) from the transfer device (7) of the robot (2); and
placing the workpiece (3) on the second pallet (5) using the transfer device (7) of the robot (2).

5. A method as claimed in claim 4 comprising providing partitioning plates on the second pallet (5) to support the workpiece (3) at a prescribed spacing from an adjacent workpiece on the second pallet (5).

6. A method as claimed in claim 5 wherein placing the workpiece (3) on the second pallet (5) results in the weight of the workpiece (3) operatively engaging at least one of the partitioning plates on the second pallet (5) to be lowered from a non-spacing position to a spacing position in which the workpiece (3) is supported at the prescribed spacing from the adjacent workpiece on the second pallet (5).

7. A method as claimed in any preceding claim wherein transporting the workpiece (3) from the first pallet (4) involves applying downward pressure to the workpiece (3) while on the first pallet (4) by a workpiece pressure device attached to the robot (2), and then subsequently holding and removing the workpiece (3) with the transfer device (7).

8. A workpiece transfer device comprising:
a holding mechanism (25, 40) configured and arranged to hold a workpiece (3) so as to be transferred from a first pallet (4) to a second pallet (5); and
a position adjustment mechanism (41) configured and arranged to movably attach the holding mechanism (25, 40) to a wrist part (6) of a robot (2), the position adjustment mechanism (41) being configured to permit adjustment of a workpiece holding position in which the workpiece (3) is held by the holding mechanism (25, 40) relative to the robot (2); and
control means (CPU) for controlling movement of the robot (2);
**characterised in that** the control means (CPU) is arranged to:
set a prescribed distance corresponding approximately to a distance from an end (3a) of the workpiece (3) to a positional adjustment part (54, 55) for a reference holding position of the robot (2); and
move the robot (2) towards the positional adjustment part (54, 55) by the prescribed distance such that the end (3a) of the workpiece (3) contacts the positional adjustment part (54, 55), thereby to move the holding mechanism (25, 40) relative to the robot (2) and to align the workpiece holding position with the reference holding position.

9. A device as claimed in claim 8 wherein the position adjustment mechanism (41) is arranged to align the workpiece holding position with respect to a robot reference holding position in a depthwise direction of the workpiece (3).

10. A device as claimed in claim 9 comprising a rotating mechanism arranged to rotate the workpiece (3) that is held by the holding mechanism (25, 40).

11. A device as claimed in claim 9 or claim 10 wherein the holding mechanism (25, 40) is arranged to hold a sheet-shaped workpiece (3) with substantially rectangular shape and the position adjustment mechanism (41) is arranged to move the workpiece that is held by the holding mechanism (25, 40) into contact with the positional adjustment part (54, 55) to perform a positional adjustment in a depthwise direction of the workpiece (3), the transverse direction of the workpiece (3), and the longitudinal direction of the workpiece (3).

12. A device as claimed in any of claims 9 to 11 comprising a partitioning plate lowering mechanism (24) configured and arranged to engage at least one partitioning plate (17) of the second pallet (5) to lower the least one partitioning plate (17) from a non-spacing position to a spacing position in which the workpiece (3) is supported at the prescribed spacing from an adjacent workpiece on the second pallet (5).

13. A device as claimed in any of claims 9 to 12 comprising a workpiece pressure mechanism (80) arranged to apply a downward pressure on the workpiece (3) to press a bottom end of the workpiece against the first pallet (4).

14. A device as claimed in claim 13 wherein the workpiece pressure mechanism (80) includes an upward and downward movement mechanism that selectively moves at least one of pads upwardly and downwardly with respect to the workpiece (3) to apply pressure to an upper end of the workpiece for holding the workpiece upright with a bottom edge of the workpiece disposed in a workpiece placement groove provided on the first pallet (4).

15. A device as claimed in claim 12 wherein the partitioning plate lowering mechanism includes: a link plate (88) rotatably mounted to rotate under the weight of the workpiece (3) when the workpiece is placed onto the second pallet (5); and a wire (90) with a first end fixed to the link plate (88) and a second end fixed to a rotating member (89) that fixes the at least one partitioning plate (17), the link plate (88) and the wire (90) being further arranged with respect to the at least one partitioning plate (17) such that the link plate (88) rotates and pulls on the wire (90) to cause the rotating member (89) to rotate and the at least one partitioning plate (17) to be lowered when the workpiece (3) is placed onto the second pallet (5).

## Patentansprüche

1. Werkstückübertragungsverfahren, umfassend:
Bereitstellen einer ersten Palette (4), die ein erstes Werkstück (3) an einer ersten Stelle enthält, die einem Automaten (2) benachbart ist, der eine Übertragungsvorrichtung (7) hat, die einen Handrahmen (25) umfaßt, der beweglich an dem Automaten (2) angebracht ist, um das Werkstück (3) aufzunehmen;
Befördern des Werkstücks (3) von der ersten Palette (4) zu einem Positionsanpassungsteil (54, 55) mittels der Übertragungsvorrichtung (7) als Antwort auf vorprogrammierte Arbeitsgänge des Automaten (2); und
Ausführen eines Ausrichtungsvorgangs des Werkstücks, um eine Werkstückhalteposition auszurichten, in welcher das Werkstück (3) durch den Handrahmen (25) bezüglich des Automaten (2) gehalten wird;
**dadurch gekennzeichnet, daß** der Ausrichtungsvorgang umfaßt:
Einstellen eines vorgeschriebenen Abstandes, der annähernd einem Abstand von einem Ende des Werkstücks (3) zu dem Positionsanpassungsteil (54, 55) entspricht, für eine Bezugshalteposition des Automaten (2); und
Bewegen des Automaten (2) in Richtung des Positionsanpassungsteils (54, 55) um den vorgeschriebenen Abstand, so daß das Ende des Werkstücks (3) das Positionsanpassungsteil (54, 55) berührt, um den Handrahmen (25) bezüglich des Automaten (2) zu bewegen und die Werkstückhalteposition nach der Bezugshalteposition anzupassen.

2. Verfahren nach Anspruch 1, wobei das Bereitstellen der ersten Palette (4), die das Werkstück (3) enthält, einschließt, daß das Werkstück ein blattförmiges Werkstück ist, das eine im Wesentlichen rechteckige Form hat; und
das Ausführen des Ausrichtungsvorgangs des Werkstücks Positionieren des Werkstücks (3) in einer tiefenmäßigen Richtung des Werkstücks, einer breitenmäßigen Richtung des Werkstücks und einer Längsrichtung des Werkstücks durch Berühren des Werkstücks, das von der Übertragungsvorrichtung gehalten wird, mit dem Positionsanpassungsteil (54, 55), enthält.

3. Verfahren nach Anspruch 2, wobei:
das Bereitstellen der ersten Palette (4), die das Werkstück (3) enthält, einschließt, daß das Werkstück ein Paar gegenüberliegender gerader Ränder und ein Paar gegenüberliegender gekrümmter Ränder hat; und
das Ausführen des Ausrichtungsvorgangs des Werkstücks zuerst Berühren der geraden Ränder mit dem Positionsanpassungsteil (54, 55) und dann Berühren der gekrümmten Ränder mit dem Positionsanpassungsteil (54, 55), um die Werkstückhalteposition, in der das Werkstück von der Übertragungsvorrichtung gehalten wird, nach der Bezugshalteposition des Automaten (2) anzupassen, enthält.

4. Verfahren nach einem der vorstehenden Ansprüche, umfassend:
Bereitstellen einer zweiten Palette (5), die eingerichtet ist, um das Werkstück (3) von der Übertragungsvorrichtung (7) des Automaten (2) zu empfangen; und
Plazieren des Werkstücks (3) auf der zweiten Palette (5) mittels der Übertragungsvorrichtung (7) des Automaten (2).

5. Verfahren nach Anspruch 4, umfassend:
Bereitstellen von Teilungsplatten auf der zweiten Palette (5), um das Werkstück mit einem vorgeschriebenen Zwischenraum zu einem benachbarten Werkstück auf der zweiten Palette (5) zu tragen.

6. Verfahren nach Anspruch 5, wobei das Plazieren des Werkstücks (3) auf der zweiten Palette (5) darin resultiert, daß das Gewicht des Werkstücks (3) wirkend mit mindestens einer der Teilungsplatten auf der zweiten Palette (5) in Eingriff tritt, um von einer Nichtzwischenraumposition zu einer Zwischenraumposition, in welcher das Werkstück (3) mit dem vorgeschriebenen Zwischenraum zu dem benachbarten Werkstück auf der zweiten Palette (5) getragen wird, abgesenkt zu werden.

7. Verfahren nach einem der vorstehenden Ansprüche, wobei das Befördern des Werkstücks (3) von der ersten Palette (4) einschließt: Anwenden eines hinunterführenden Drucks auf das Werkstück (3), während es sich auf der ersten Palette (4) befindet, durch eine Werkstückdruckvorrichtung, die an dem Automaten (2) angebracht ist, und dann nacheinander Halten und Entfernen des Werkstücks (3) mit der Übertragungsvorrichtung (7).

8. Werkstückübertragungsvorrichtung, umfassend:
einen Haltemechanismus (25, 40), der eingerichtet und angeordnet ist, ein Werkstück (3) zu halten, so daß es von einer ersten Palette (4) zu einer zweiten Palette (5) übertragen wird; und
ein Positionsanpassungsmechanismus (41), der eingerichtet und angeordnet ist, den Haltemechanismus (25, 40) beweglich an ein Gelenkteil (6) eines Automaten (2) anzubringen, wobei der Positionsanpassungsmechanismus (41) eingerichtet ist, Anpassung einer Werkstückhalteposition zu erlauben, in welcher das Werkstück (3) durch den Haltemechanismus (25, 40) bezüglich des Automaten (2) gehalten wird; und
Steuermittel (CPU), um eine Bewegung des Automaten (2) zu steuern;
**dadurch gekennzeichnet, daß** das Steuermittel (CPU) angeordnet ist, um:
einen vorgeschriebenen Abstand einzustellen, der annähernd einem Abstand von einem Ende (3a) des Werkstücks (3) zu dem Positionsanpassungsteil (54, 55) entspricht, für eine Bezugshalteposition des Automaten (2); und
den Automaten (2) in Richtung des Positionsanpassungsteils (54, 55) um den vorgeschriebenen Abstand zu bewegen, so daß das Ende (3a) des Werkstücks (3) das Positionsanpassungsteil (54, 55) berührt, um den Handrahmen (25) bezüglich des Automaten (2) zu bewegen und die Werkstückhalteposition nach der Bezugshalteposition anzupassen.

9. Vorrichtung nach Anspruch 8, wobei der Positionsanpassungsmechanismus (41) angeordnet ist, die Werkstückhalteposition bezüglich einer Automatenbezugshalteposition in einer tiefenmäßigen Richtung des Werkstücks (3) anzupassen.

10. Vorrichtung nach Anspruch 9, umfassend:
einen Drehmechanismus, der angeordnet ist, das Werkstück (3), das durch den Haltemechanismus (25, 40) gehalten wird, zu drehen.

11. Vorrichtung nach Anspruch 9 oder Anspruch 10, wobei der Haltemechanismus (25, 40) angeordnet ist, ein blattförmiges Werkstück (3) mit einer im Wesentlichen rechteckigen Form zu halten, und der Positionsanpassungsmechanismus (41) angeordnet ist, das Werkstück, das durch den Haltemechanismus (25, 40) gehalten wird, mit dem Positionsanpassungsmechanismus (54, 55) in Berührung zu bewegen, um eine Positionsanpassung in einer tiefenmäßigen Richtung des Werkstücks (3), der Querrichtung des Werkstücks (3) und der Längsrichtung des Werkstücks (3) auszuführen.

12. Vorrichtung nach einem der Ansprüche 9 bis 11, umfassend:
einen Teilungsplattenabsenkmechanismus (24), der eingerichtet und angeordnet ist, mit mindestens einer Teilungsplatte (17) der zweiten Palette (5) in Eingriff zu treten, um die mindestens eine Teilungsplatte (17) von einer Nichtzwischenraumposition zu einer Zwischenraumposition abzusenken, in welcher das Werkstück (3) mit dem vorgeschriebenen Zwischenraum zu einem benachbarten Werkstück auf der zweiten Palette (5) getragen wird.

13. Vorrichtung nach einem der Ansprüche 9 bis 12, umfassend:
einen Werkstückdruckmechanismus (80), der angeordnet ist, einen hinunterführenden Druck auf das Werkstück (3) anzuwenden, um ein unteres Ende des Werkstücks gegen die erste Palette (4) zu drücken.

14. Vorrichtung nach Anspruch 13, wobei der Werkstückdruckmechanismus (80) einen Aufwärts- und Abwärtsbewegungsmechanismus enthält, der mindestens einen Gummifuß wahlweise bezüglich des Werkstücks (3) auf- und abbewegt, um Druck auf ein oberes Ende des Werkstücks anzuwenden, um das Werkstück aufrecht zu halten, wobei ein unterer Rand des Werkstücks in eine Werkstückablagenut, die auf der ersten Palette (4) angelegt ist, gesetzt wird.

15. Vorrichtung nach Anspruch 12, wobei der Teilungsplattenabsenkmechanismus enthält:
eine Verbindungsplatte (88), die beweglich montiert ist, um sich unter dem Gewicht des Werkstücks (3) zu drehen, wenn das Werkstück auf die zweite Palette (5) plaziert wird; und ein Kabel (90) mit einem ersten Ende, das an der Verbindungsplatte (88) befestigt ist, und einem zweiten Ende, das an einem Drehteil (89), das mindestens eine Teilungsplatte (88) befestigt, befestigt ist, wobei die Verbindungsplatte (88) und das Kabel (90) weiterhin bezüglich der mindestens einen Teilungsplatte (17) derart angeordnet sind, daß die Verbindungsplatte (88) das Kabel (90) dreht und zieht, um zu veranlassen, daß sich das Drehteil (89) dreht und die mindestens eine Teilungsplatte (17) abgesenkt wird, wenn das Werkstück (3) auf die zweite Palette (5) plaziert wird.

## Revendications

1. Une méthode de transfert de pièce de fabrication comprenant:
fournir une première palette (4) contenant une pièce de fabrication (3) dans une première position adjacente à un robot, le robot ayant un dispositif de transfert (7) comprenant un cadre manuel (25) attaché de manière mobile au robot (2) pour soulever la pièce de fabrication (3);
transporter la pièce de fabrication (3) de la première palette (4) à une partie d'ajustement de position (54, 55) en utilisant le dispositif de transfert (7) en réponse à des opérations préprogrammées du robot (2) ; et
effectuer une opération d'alignement de la pièce de fabrication (3) pour aligner une position de maintien de la pièce de fabrication (3), dans laquelle la pièce de fabrication (3) est maintenue par le cadre manuel (25), par rapport au robot (2);
**caractérisée en ce que** l'opération d'alignement comprend:
fixer une distance prescrite correspondant approximativement à une distance entre une extrémité de la pièce de fabrication (3) et la partie d'ajustement de position (54, 55) pour une position de maintien de référence du robot (2) ; et
déplacer le robot (2) vers la partie d'ajustement de position (54, 55) de la distance prescrite de manière à ce que l'extrémité de la pièce de fabrication entre en contact avec la partie d'ajustement de position (54, 55) pour déplacer le cadre manuel (25) par rapport au robot (2) et aligner la position de maintien de la pièce de fabrication avec la position de maintien de référence.

2. La méthode selon la revendication 1, dans laquelle :
fournir la première palette (4) contenant la pièce de fabrication (3) implique que la pièce de fabrication est une pièce de fabrication ayant une forme de feuille essentiellement rectangulaire, et
effectuer l'opération d'alignement de la pièce de fabrication (3) comprend de positionner la pièce de fabrication dans une direction de profondeur de la pièce de fabrication, dans une direction de largeur de la pièce de fabrication et dans une direction longitudinale de la pièce de fabrication en faisant entrer en contact la pièce de fabrication maintenue par le dispositif de transfert (7) avec la partie d'ajustement de position (54, 55).

3. La méthode selon la revendication 2, dans laquelle :
fournir la première palette (4) contenant la pièce de fabrication (3) implique que la pièce de fabrication a une paire de cotés opposés linéaires et une paire de cotés opposés courbés, et
effectuer l'opération d'alignement comprend premièrement de faire entrer en contact les cotés linéaires avec la partie d'ajustement de position (54, 55) et ensuite de faire entrer en contact les cotés courbés avec la partie d'ajustement de position (54, 55) pour aligner la position de maintien de la pièce de fabrication (3), dans laquelle la pièce de fabrication (3) est maintenue par le dispositif de transfert (7), avec une position de maintien de référence du robot (2).

4. La méthode selon l'une des revendications précédentes comprenant :
fournir une deuxième palette (5) configurée pour recevoir la pièce de fabrication (3) du dispositif de transfert (7) du robot (2) ; et
placer la pièce de fabrication (3) sur la deuxième palette (5) en utilisant le dispositif de transfert (7) du robot (2).

5. La méthode selon la revendication 4, comprenant fournir des plateaux de séparation sur la deuxième palette (5) pour maintenir la pièce de fabrication (3) à un espacement prescrit d'une pièce de fabrication adjacente sur la deuxième palette (5).

6. La méthode selon la revendication 5, dans laquelle placer la pièce de fabrication (3) sur la deuxième palette (5) résulte en ce que le poids de la pièce de fabrication (3) qui s'engage opérationnellement au moins un des plateaux de séparation dans la deuxième palette (5) est abaissé d'une position de non-séparation à une position de séparation dans laquelle la pièce de fabrication est maintenue avec un espacement prescrit par rapport à la pièce de fabrication adjacente sur la deuxième palette (5).

7. La méthode selon l'une des revendications précédentes, dans laquelle transporter la pièce de fabrication (3) depuis la première palette (4) implique d'appliquer une pression négative sur la pièce de fabrication (3) quand la pièce de fabrication (3) est sur la première palette (4) en utilisant un dispositif de pression de pièce de fabrication attaché au robot (2), et par la suite de maintenir et d'enlever la pièce de fabrication (3) avec le dispositif de transfert (7).

8. Un dispositif de transfert de pièce de fabrication comprenant :
un mécanisme de maintien (25, 40) configuré et arrangé pour maintenir une pièce de fabrication (3) de manière à la transférer d'une première palette (4) à une deuxième palette (5), et
un mécanisme d'ajustement de position (41) configuré et arrangé pour attacher de manière mobile le mécanisme de maintien (25, 40) à une partie articulée (6) d'un robot (2), le mécanisme d'ajustement de position (41) étant configuré pour permettre l'ajustement d'une position de maintien de pièce de fabrication dans laquelle la pièce de fabrication (3) est maintenue par le mécanisme de maintien (25, 40) par rapport au robot ; et
des moyens de contrôle (CPU) pour contrôler le mouvement du robot (2) ;
**caractérisé en ce que** les moyens de contrôle du robot (CPU) sont arrangés pour :
fixer une distance prescrite correspondant approximativement à une distance entre une extrémité (3a) de la pièce de fabrication (3) et une partie d'ajustement de position (54, 55) pour une position de maintien de référence du robot (2) ; et
déplacer le robot (2) vers la partie d'ajustement de position (54, 55) de la distance prescrite de manière à ce que l'extrémité (3a) de la pièce de fabrication (3) entre en contact avec la partie d'ajustement de position (54, 55), de manière à déplacer le cadre manuel (25) par rapport au robot (2) et aligner la position de maintien de la pièce de fabrication avec la position de maintien de référence.

9. Le dispositif selon la revendication 8 dans lequel le mécanisme d'ajustement de position (41) est arrangé pour aligner la position de maintien de pièce de fabrication par rapport à une position de maintien de référence du robot dans une direction de profondeur de la pièce de fabrication (3).

10. Le dispositif selon la revendication 9 comprenant un mécanisme de rotation arrangé pour faire tourner la pièce de fabrication (3) qui est maintenue par le mécanisme de maintien (25, 40).

11. Le dispositif revendiqué dans les revendications 9 ou 10 dans lequel le mécanisme de maintien (25, 40) est arrangé pour maintenir une pièce de fabrication (3) de forme de feuille essentiellement rectangulaire et le mécanisme d'ajustement de position (41) est arrangé pour faire entrer en contact la pièce de fabrication qui est maintenue par le mécanisme de maintien (25, 40) avec la partie d'ajustement de position (54, 55) pour effectuer un ajustement de position dans une direction de profondeur de la pièce de fabrication (3), dans une direction transverse de la pièce de fabrication (3) et dans une direction longitudinale de la pièce de fabrication (3).

12. Le dispositif selon l'une des revendications 9 à 11 comprenant un mécanisme d'abaissement de plateau de séparation (24) configuré et arrangé pour engager au moins un plateau de séparation (17) de la deuxième palette (5) pour abaisser le au moins un plateau de séparation (17) d'une position de non-séparation à une position de séparation dans laquelle la pièce de fabrication (3) est maintenue à l'espacement prescrit d'une pièce de fabrication adjacente sur la deuxième palette (5).

13. Le dispositif selon l'une des revendications 9 à 12 comprenant un mécanisme de pression de pièce de fabrication (80) arrangé pour appliquer une pression négative sur la pièce de fabrication (3) pour presser une extrémité inférieure de la pièce de fabrication contre la première palette (4).

14. Le dispositif selon la revendication 13, dans lequel le mécanisme de pression de pièce de fabrication (80) inclut un mécanisme de mouvement vers le haut et vers le bas qui déplace sélectivement au moins un des patins vers le haut et vers le bas par rapport à la pièce de fabrication (3) pour appliquer une pression à une extrémité supérieure de la pièce de fabrication pour maintenir la pièce de fabrication verticalement avec un coté supérieur de la pièce de fabrication disposé dans une fente de placement de pièce de fabrication agencé sur la première palette (4).

15. Le dispositif selon la revendication 12 dans lequel le mécanisme d'abaissement de plateau de séparation inclut : un plateau de liaison (88) monté de manière à pouvoir tourner sous le poids de la pièce de fabrication (3) quand la pièce de fabrication (3) est placée sur la deuxième palette (5) ; et un câble (90) avec une première extrémité fixée au plateau de liaison (88) et une deuxième extrémité fixée à un membre rotatif (89) qui est lié au au moins un plateau de séparation (17), le plateau de liaison (88) et le câble (90) étant en plus arrangés par rapport au au moins un plateau de séparation (17) de manière à ce que le plateau de liaison (88) pivote et tire le câble (90) de manière à faire tourner le membre rotatif (89) et à faire s'abaisser le au moins un plateau de séparation (17) quand la pièce de fabrication (3) est placée sur la deuxième palette (5).
